# EUROPEAN PATENT SPECIFICATION

(11) **EP 4 517 668 B1**
(45) Date of publication and mention of the grant of the patent: **09.09.2026**
(21) Application number: 23802754.4
(22) Date of filing: 05.05.2023
(51) Int. Cl.: G06T 7/80, G06V 10/10

(54) **DATA PROCESSING METHOD AND APPARATUS, COMPUTER DEVICE, STORAGE MEDIUM AND PROGRAM PRODUCT**
DATENVERARBEITUNGSVERFAHREN UND -VORRICHTUNG, COMPUTERVORRICHTUNG, SPEICHERMEDIUM UND PROGRAMMPRODUKT
PROCÉDÉ ET APPAREIL DE TRAITEMENT DE DONNÉES, DISPOSITIF INFORMATIQUE, SUPPORT DE STOCKAGE ET PRODUIT-PROGRAMME

(30) Priority: 10.05.2022 CN 202210500935
(43) Date of publication of application: 05.03.2025
(73) Proprietor: Tencent Technology (Shenzhen) Company Limited, Shenzhen, Guangdong 518057 (CN)
(72) Inventor: CHEN, Fasheng, Shenzhen, Guangdong 518057 (CN); LIN, Zhiyang, Shenzhen, Guangdong 518057 (CN); SUN, Lei, Shenzhen, Guangdong 518057 (CN); WANG, Rujian, Shenzhen, Guangdong 518057 (CN); CHEN, Xiangguang, Shenzhen, Guangdong 518057 (CN)
(74) Representative: Gunzelmann, Rainer
(86) International application number: PCT/CN2023/092217
(87) International publication number: WO 2023/216982

(56) References cited:
- WO-A1-2019/184885
- CN-A- 103 903 260
- CN-A- 108 562 274
- CN-A- 110 047 109
- CN-A- 110 349 219
- CN-A- 110 827 361
- CN-A- 112 085 798
- CN-A- 114 359 318
- CN-A- 114 596 368
- CN-B- 107 527 368

## Description

### RELATED APPLICATION

This application claims priority to Chinese Patent Application No. 202210500935.0, filed with the China National Intellectual Property Administration on May 10, 2022 and entitled "DATA PROCESSING METHOD AND APPARATUS, COMPUTER DEVICE, STORAGE MEDIUM, AND PROGRAM PRODUCT".

### FIELD OF THE TECHNOLOGY

This application relates to the field of computer technologies, and in particular, to a data processing method and apparatus, a computer device, a storage medium, and a program product.

### BACKGROUND OF THE DISCLOSURE

Currently, during calibration of an intrinsic component parameter (that is, an intrinsic camera parameter) of a camera component, a calibration board (that is, a shot object) needs to be captured from a plurality of angles by using the camera component, and then the intrinsic component parameter of the camera component is generated based on a plurality of images captured from the plurality of angles. Alternatively, video shooting needs to be performed on the calibration board by using the camera component, and then the intrinsic component parameter of the camera component is generated based on a plurality of video frames captured from the shot video obtained through video shooting. However, the manner of generating the intrinsic component parameter through the plurality of captured images or the plurality of captured video frames requires time to process the plurality of images. Therefore, a speed of calibrating the intrinsic component parameter is increased.

In addition, in the related art, a hardware device (for example, a focus follower) may further be installed in the camera component, and the intrinsic component parameter of the camera component may be directly read by using the hardware device. However, the hardware device is very expensive, and installation and deployment are very troublesome, which increases the costs of calibrating the intrinsic component parameter.

Previous proposed arrangements are disclosed in CN 110047109A, CN 114359318A and CN 110827361A.

### SUMMARY

Embodiments of this application provide a data processing method and apparatus, a computer device, a storage medium, and a program product, which helps improve efficiency of determining an intrinsic camera parameter.

An aspect of the embodiments of this application provides a data processing method, executable by a computer device, the method including:
obtaining an image of an object, the image being captured by a camera component, the image comprising one or more planar regions of the object, each of the one or more planar regions comprising an array of identification patterns, each of the identification patterns carrying information of an identifier;
identifying an identifier of each identification pattern from the image and a sequence having vertexes of the respective identification pattern, the vertexes in the sequence being in a preset order, each of the vertexes of the respective identification pattern being on an edge of the respective identification pattern;
determining an identifier of each of the vertexes of the respective identification pattern by combining the identifier of the respective identification pattern with an order number of the respective vertex;
obtaining a first mapping relationship between each identifier of vertexes on each edge of identification patterns in the array and a straight line where the respective edge of the identification patterns in the array is located;
determining, based on the first mapping relationship and the vertexes of the respective identification pattern, straight line equations fitting straight lines;
obtaining a second mapping relationship between the straight lines and vanishing points;
determining the vanishing points based on the second mapping relationship and the straight line equations; and
calibrating an intrinsic parameter of the camera component based on the determined vanishing points.

An aspect of the embodiments of this application provides a data processing apparatus, including:
an image obtaining module, configured to obtain an image of an object, the image being captured by a camera component, the image comprising one or more planar regions of the object, each of the one or more planar regions comprising an array of identification patterns, each of the identification patterns carrying information of an identifier;
an identification unit, configured to identify an identifier of each identification pattern from the image and a sequence having vertexes of the respective identification pattern, the vertexes in the sequence being in a preset order, each of the vertexes of the respective identification pattern being on an edge of the respective identification pattern; and determine an identifier of each of the vertexes of the respective identification pattern by combining the identifier of the respective identification pattern with an order number of the respective vertex;
a straight line fitting unit, configured to: obtain a first mapping relationship between each identifier of vertexes on each edge of identification patterns in the array and a straight line where the respective edge of the identification patterns in the array is located; and determine, based on the first mapping relationship and the vertexes of the respective identification pattern, straight line equations fitting straight lines;
a vanishing point determination unit, configured to: obtain a second mapping relationship between the straight lines and vanishing points; determine the vanishing points based on the second mapping relationship and the straight line equations; and
a calibration unit, configured to calibrate an intrinsic parameter of the camera component based on the determined vanishing points.

An aspect of the embodiments of this application provides a computer device, including: a processor and a memory,
the processor being connected to the memory, the memory being configured to store a computer program, the computer program, when executed by the processor, causing the computer device to perform the method provided in the embodiments of this application.

An aspect of the embodiments of this application provides a computer-readable storage medium, the computer-readable storage medium having a computer program stored therein, the computer program being adapted to be loaded and executed by a processor, to cause a computer device having the processor to perform the method provided in the embodiments of this application.

An aspect of the embodiments of this application provides a computer program product or a computer program, the computer program product including a computer program, the computer program being stored in a computer-readable storage medium. The processor of the computer device reads the computer program from the computer-readable storage medium. The processor executes the computer program, causing the computer device to perform the method provided in the embodiments of this application.

### BRIEF DESCRIPTION OF THE DRAWINGS

To describe the technical solutions in embodiments of this application or the related art more clearly, the following briefly describes the accompanying drawings required for describing the embodiments or the related art. Apparently, the accompanying drawings in the following description show only some embodiments of this application, and a person of ordinary skill in the art may still derive other accompanying drawings from the accompanying drawings without creative efforts.
FIG. 1 is a schematic structural diagram of a network architecture according to an embodiment of this application.
FIG. 2a is a schematic diagram I of a scene for data interaction according to an embodiment of this application.
FIG. 2b is a schematic diagram II of a scene for data interaction according to an embodiment of this application.
FIG. 2c is a schematic diagram III of a scene for data interaction according to an embodiment of this application.
FIG. 3 is a schematic flowchart I of a data processing method according to an embodiment of this application.
FIG. 4 is a schematic diagram of a scene for identifying an identification pattern according to an embodiment of this application.
FIG. 5 is a schematic flowchart of determining an intrinsic component parameter according to an embodiment of this application.
FIG. 6 is a schematic flowchart of internal memory preallocation according to an embodiment of this application.
FIG. 7 is a schematic flowchart II of a data processing method according to an embodiment of this application.
FIG. 8 is a schematic diagram of a scene for assigning a straight line identifier according to an embodiment of this application.
FIG. 9 is a schematic diagram of a scene for determining a vanishing point identifier according to an embodiment of this application.
FIG. 10 is a schematic flowchart III of a data processing method according to an embodiment of this application.
FIG. 11 is a schematic flowchart of determining a straight line equation according to an embodiment of this application.
FIG. 12 is a schematic flowchart IV of a data processing method according to an embodiment of this application.
FIG. 13 is a schematic flowchart of determining coordinates of a vanishing point according to an embodiment of this application.
FIG. 14 is a schematic flowchart V of a data processing method according to an embodiment of this application.
FIG. 15 shows a flowchart of a data processing method 1500 according to an embodiment of this application.
FIG. 16 is a schematic structural diagram of a data processing apparatus according to an embodiment of this application.
FIG. 17 is a schematic structural diagram of a computer device according to an embodiment of this application.

### DESCRIPTION OF EMBODIMENTS

The technical solutions in embodiments of this application are clearly and completely described below with reference to the accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

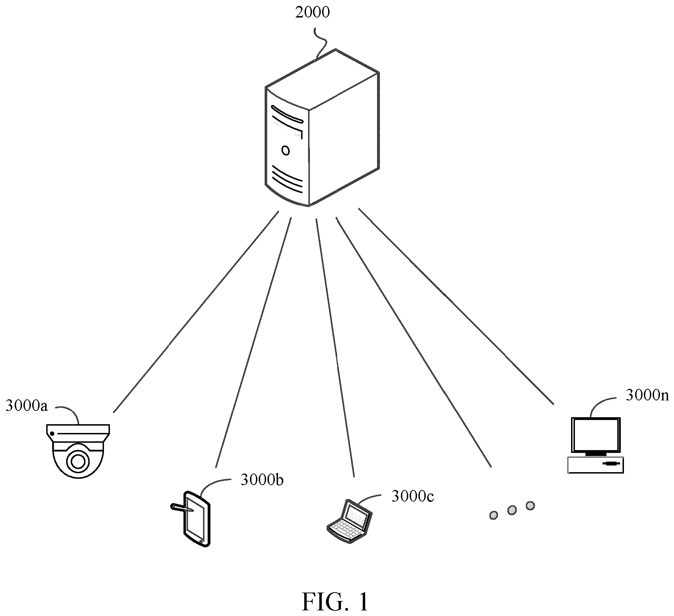

Specifically, FIG. 1 is a schematic structural diagram of a network architecture according to an embodiment of this application. As shown in FIG. 1, the network architecture may include a server 2000 and a terminal device cluster. The terminal device cluster may specifically include one or more terminal devices, and a quantity of terminal devices in the terminal device cluster is not limited herein. As shown in FIG. 1, the plurality of terminal devices may specifically include a terminal device 3000a, a terminal device 3000b, a terminal device 3000c, ..., and a terminal device 3000n. The terminal device 3000a, the terminal device 3000b, the terminal device 3000c, ..., and the terminal device 3000n may perform direct or indirect network connection with the server 2000 through wired or wireless communication, respectively, so that each terminal device may perform data interaction with the server 2000 through the network connection.

Each terminal device in the terminal device cluster may include: an intelligent terminal having a data processing function such as a smart phone, a tablet computer, a notebook computer, a desktop computer, a smart home appliance, a wearable device, an onboard terminal, an intelligent voice interaction device, and a camera. For ease of understanding, in the embodiments of the present disclosure including the embodiments of both the claims and the specification (hereinafter referred to as "all embodiments of the present disclosure"), a terminal device may be selected as a target terminal device from the plurality of terminal devices shown in FIG. 1. For example, in all embodiments of the present disclosure, the terminal device 3000b shown in FIG. 1 may be used as the target terminal device.

The server 2000 may be an independent physical server, or may be a server cluster formed by a plurality of physical servers or a distributed system, and may further be a cloud server that provides basic cloud computing services such as cloud service, a cloud database, cloud computing, a cloud function, cloud storage, a network service, cloud communication, a middleware service, a domain name service, a security service, a CDN, and a big data and artificial intelligence platform.

It is to be understood that the terminal device may be integrated with a camera component for capturing an image associated with an object. The camera component herein may be a camera component for capturing a photo or a video on the terminal device, for example, a camera. A plurality of camera components may be integrated and installed on a terminal device. The object may be an identification pattern green screen, and the identification pattern green screen represents a green screen printed with identification patterns. In all embodiments of the present disclosure, the identification pattern green screen may be a two-dimensional code green screen, or a checkerboard green screen, and the checkerboard green screen represents a green screen printed with a rectangular box in a solid color (for example, black). In addition, the object may further include a to-be-shot subject (for example, a lion). It is to be understood that this embodiment of this application is described by using an example in which the object is the two-dimensional code green screen.

The two-dimensional code green screen may include three surfaces (i.e., three planar regions): left wall + right wall + ground. In all embodiments of the present disclosure, the two-dimensional code green screen may alternatively be any one surface of the left wall, right wall, and the ground. Alternatively, the two-dimensional code green screen may include any two surfaces of the left wall, right wall, and the ground. All two-dimensional codes in the two-dimensional code green screen have unique patterns and identifiers, which may be detected in the image by using an identification pattern detection algorithm (for example, a two-dimensional code detection algorithm), and coordinates of vertexes of the two-dimensional codes on the image can be accurately obtained. For a single two-dimensional code, four vertices formed by a frame (that is, a bounding rectangle of the two-dimensional code) of the two-dimensional code may be referred to as vertexes of the two-dimensional code, and four edges of a quadrilateral defined by the four vertexes of the two-dimensional code are an upper edge, a lower edge, a left edge, and a right edge.

It is to be understood that in this application, the two-dimensional code that can be correctly identified by using the two-dimensional code detection algorithm may be referred to as an observable two-dimensional code. It is to be understood that when the two-dimensional code is blocked, the two-dimensional code is not clear, or a part of the two-dimensional code exceeds a picture boundary of the image, the two-dimensional code detection algorithm cannot be used to detect the two-dimensional code. In this case, the two-dimensional code is not regarded as the observable two-dimensional code.

In all embodiments of the present disclosure, the upper edge, the lower edge, the left edge, and the right edge of the two-dimensional code may be collectively referred to as line segments of the two-dimensional code in this application.

It is to be understood that the foregoing network architecture may be applied to the field of virtual-real fusion, for example, virtual-real fusion in video production (virtual production), live streaming, and post-video special effects. The virtual-real fusion means that a real to-be-shot subject is incorporated into a virtual scene. Compared with a conventional method that involves entirely real shooting, the virtual-real fusion can allow for easy scene replacement, greatly reduce the costs of setting up scenes (the virtual-real fusion requires only a green screen), and can provide impressively cool environmental effects. In addition, the virtual-real fusion is also highly consistent with concepts such as virtual reality (VR), metaverse, and the Complete Reality of Internet, which can provide a very basic ability to incorporate a real person into the virtual scene.

It may be understood that the terminal device may shoot a real scene through the camera component (that is, a real lens), obtain the virtual scene from the server 2000, and fuse the virtual scene with the real scene to obtain a fusion scene. The virtual scene may be a scene synthesized directly by the server 2000, or may be a scene obtained by the server 2000 from another terminal device other than the terminal device. Another terminal device other than the terminal device may shoot the virtual scene through the camera component (that is, a virtual lens).

According to the virtual-real fusion method in this application, the camera component needs to be calibrated before the shooting to ensure correct visual perception of the subsequently synthesized picture (a correct perspective relationship). To ensure the correct perspective relationship between the virtual scene and the real scene, the terminal device needs to ensure that intrinsic component parameters respectively corresponding to the virtual scene and the real scene (that is, intrinsic camera parameters) match. Therefore, the intrinsic component parameter of the camera component in the terminal device for the image may be obtained by identifying the image captured by the terminal device, and then the intrinsic component parameter corresponding to the camera component may be adjusted. The to-be-shot object may be shot based on the camera component with the adjusted intrinsic component parameter, and finally the fusion scene having the correct perspective relationship is obtained. The intrinsic component parameter of the camera component is an intrinsic camera parameter, and the intrinsic camera parameter may include but is not limited to an optical center and a focal length.

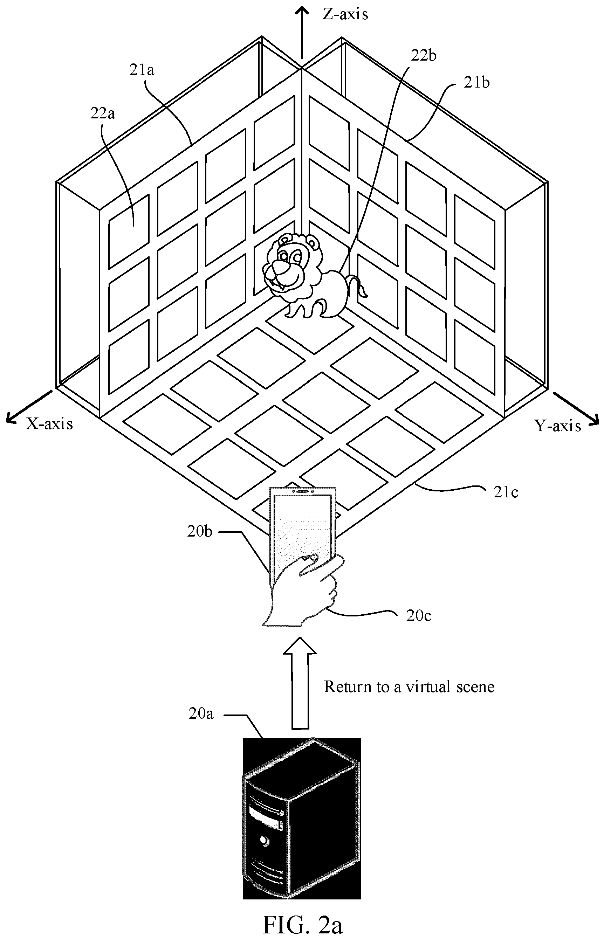

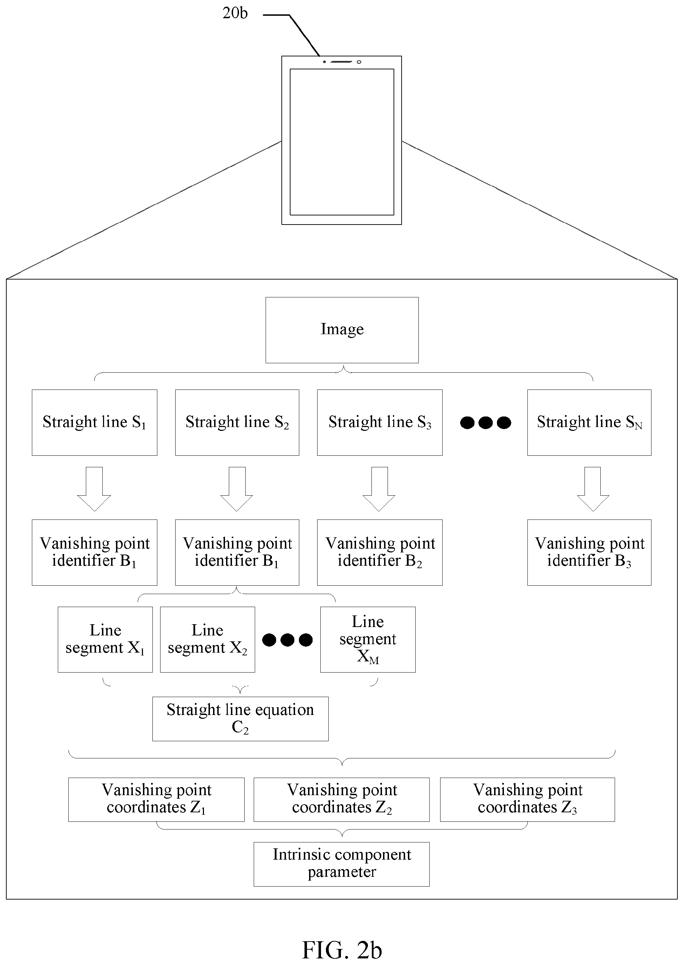

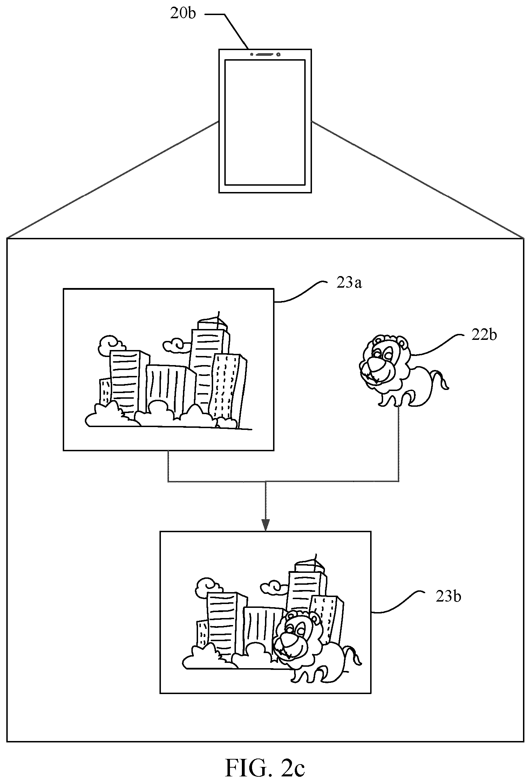

For ease of understanding, further, FIG. 2a is a schematic diagram I of a scene for data interaction according to embodiments of the present disclosure, FIG. 2b is a schematic diagram II of a scene for data interaction according to embodiments of the present disclosure, and FIG. 2c is a schematic diagram III of a scene for data interaction according to embodiments of the present disclosure. A server 20a shown in FIG. 2a may be the server 2000 in the embodiment corresponding to FIG. 1, and a terminal device 20b shown in FIG. 2a, FIG. 2b, and FIG. 2c may be the terminal device in the embodiment corresponding to FIG. 1. A user corresponding to the terminal device may be an object 20c, and the terminal device is integrated with a camera component.

As shown in FIG. 2a, the object 20c may shoot an object through the camera component in the terminal device 20b to obtain an image. The image may be a photo directly captured by a shooting component, or may be an image captured from a video shot by the shooting component. The object may include two planar regions or three planar regions among a left wall 21a, a right wall 21b, and a ground region 21c. A to-be-shot subject 22b may be a lion standing on the ground region 21c. An aluminum alloy support may be mounted behind the left wall 21a and the right wall 21b, and the left wall 21a and the right wall 21b are supported by the aluminum alloy support.

The planar region of the object corresponds to at least two coordinate axes, every two of the at least two coordinate axes are used to indicate a planar region (that is, a planar region where the left wall 21a is located, or a planar region where the right wall 21b is located, and or a planar region where the ground region 21c is located), and any two coordinate axes are perpendicular to each other. As shown in FIG. 2a, the object may correspond to three coordinate axes. The three coordinate axes may be specifically an x-axis, a y-axis, and a z-axis. The three coordinate axes form a first three-dimensional rectangular coordinate system. Every two of the three coordinate axes may be used to indicate a planar region. The x-axis and the z-axis may be used to indicate the planar region including the left wall 21a. The y-axis and the z-axis may be used to indicate the planar region where the right wall 21b is located. The x-axis and the y-axis may be used to indicate the planar region where the ground region 21c is located. Each planar region includes an array of identification patterns. An edge contour of the identification patterns is rectangular. For example, the left wall 21a may include an identification pattern 22a, and FIG. 2a shows the edge contour of the identification pattern 22a. It is to be understood that a quantity of identification patterns in the planar region is not limited in the embodiments of this application.

As shown in FIG. 2b, the terminal device 20b may obtain, from the image after capturing the image, the line segments of the identification patterns (that is, edges of the identification patterns) are located straight lines. For example, upper edges of the identification patterns of the same row in the array may be located a same straight line, and a quantity of straight lines may be N. N may be a positive integer herein, and N straight lines may specifically include: a straight line S₁, a straight line S₂, a straight line S₃, ..., and a straight line S_{N}.

Further, the terminal device 20b may assign straight line identifiers (which may alternatively be referred to as identifiers of straight lines) to N straight lines, and the straight line identifiers of the straight line are used as line segment identifiers of the line segments. For example, the straight line identifiers assigned by the terminal device 20b to the straight line S₂ may be a straight line identifier K. In this way, when the line segments on the straight line S₂ are a line segment X₁, a line segment X₂, ..., and a line segment X_{M}, the terminal device 20b uses the straight line identifier K as the line segment identifier of the line segment X₁, the line segment X₂, ..., and the line segment X_{M}. To be specific, the line segment identifier of the line segment X₁, the line segment X₂, ..., and the line segment X_{M} is the straight line identifier K (that is, a line segment identifier K).

As shown in FIG. 2b, the terminal device 20b may determine vanishing point identifiers respectively mapped by the N straight lines. One vanishing point identifier corresponds to one vanishing point, and a quantity of vanishing points is, for example, 2 or 3. The vanishing point represents a visual intersection point of image projection of parallel lines in the real world. To be specific, an intersection point of the straight lines in the image may be referred to as the vanishing point in the embodiments of this application. For example, the terminal device 20b may determine that a vanishing point identifier mapped by the straight line S₁ is a vanishing point identifier B₁, a vanishing point identifier mapped by the straight line S₂ is a vanishing point identifier B₁, a vanishing point identifier mapped by the straight line S₃ is a vanishing point identifier B₂, ..., and a vanishing point identifier mapped by the straight line S_{N} is a vanishing point identifier B₃.

As shown in FIG. 2b, the terminal device 20b may generate a straight line equation of a straight line based on the line segment identifier and vertex coordinates of vertexes in the line segment. For example, the terminal device 20b may generate a straight line equation C₂ of the straight line S₂ based on the line segment identifier K of the line segment X₁, the line segment X₂, ..., and the line segment X_{M}, and the vertex coordinates of vertexes in the line segment X₁, the line segment X₂, ..., and the line segment X_{M}. The straight line identifier of the straight line S₂ is the straight line identifier K.

Further, the terminal device 20b may determine, based on the vanishing point identifier and the straight line equation, vanishing point coordinates of the vanishing point indicated by the vanishing point identifier. Specifically, the terminal device 20b may generate, based on the vanishing point identifier and the straight line equation of the straight line mapped by the vanishing point identifier, the vanishing point coordinates of the vanishing point indicated by the vanishing point identifier. For example, the terminal device 20b may generate, based on the straight line equation of the straight line (the straight line mapped by the vanishing point identifier B₁ includes the straight line S₁ and the straight line S₂) mapped by the vanishing point identifier B₁, the vanishing point coordinates of the vanishing point indicated by the vanishing point identifier B₁. The vanishing point coordinates of the vanishing point indicated by the vanishing point identifier B₁ may be vanishing point coordinates Z₁. Similarly, the vanishing point coordinates of the vanishing point indicated by the vanishing point identifier B₂ may be vanishing point coordinates Z₂, and the vanishing point coordinates of the vanishing point indicated by the vanishing point identifier B₃ may be vanishing point coordinates Z₃.

As shown in FIG. 2b, the terminal device 20b may determine an intrinsic component parameter of the camera component in the terminal device 20b for the image based on the vanishing point coordinates Z₁, the vanishing point coordinates Z₂, and the vanishing point coordinates Z₃. In the meanwhile, as shown in FIG. 2a, the terminal device 20b may further obtain a virtual scene for virtual-real fusion from the server 20a, where the virtual scene herein may be a virtual scene 23a shown in FIG. 2c.

As shown in FIG. 2c, after the terminal device 20b determines the intrinsic component parameter of the camera component in the terminal device 20b for the image and obtains the virtual scene 23a from the server 20a, a to-be-shot subject 22b in the image may be incorporated into the virtual scene 23a based on the intrinsic component parameter, to obtain a fusion scene 23b having a correct perspective relationship.

It may be seen that in this embodiment of this application, a single image captured by the camera component may be processed, straight lines parallel to the x-axis, the y-axis, and the z-axis in the image are obtained in real time, the vanishing point of each group of parallel lines is accurately calculated, and then the intrinsic component parameter of the camera component is calibrated based on the vanishing point coordinates of the vanishing point formed by the straight line. In this embodiment of this application, the intrinsic component parameter of the camera component may be determined by using the single image without processing a plurality of images and without using a hardware device to calibrate the intrinsic component parameter, which may significantly reduce the costs of calibrating the intrinsic component parameter and improve efficiency of calibration.

The virtual-real fusion requires calibration of the camera component. In this embodiment of this application, in collaboration with a shooting technique in which the object can support real-time optical zoom (for example, Hitchcock zoom), a video with an impressively cool picture effect can be produced, thereby improving viewing experience of the virtual-real fusion and attracting more users. In addition, according to this application, hardware costs of supporting optical zoom may be greatly reduced while clarity is ensured, and a hardware threshold can be reduced. A mobile phone, an ordinary camera, and a professional camera may all be used. Installation, deployment, and operation are simple, and a threshold for users to use is lowered to attract more video production users. In the meanwhile, the object can further assist in image matting and camera movement.

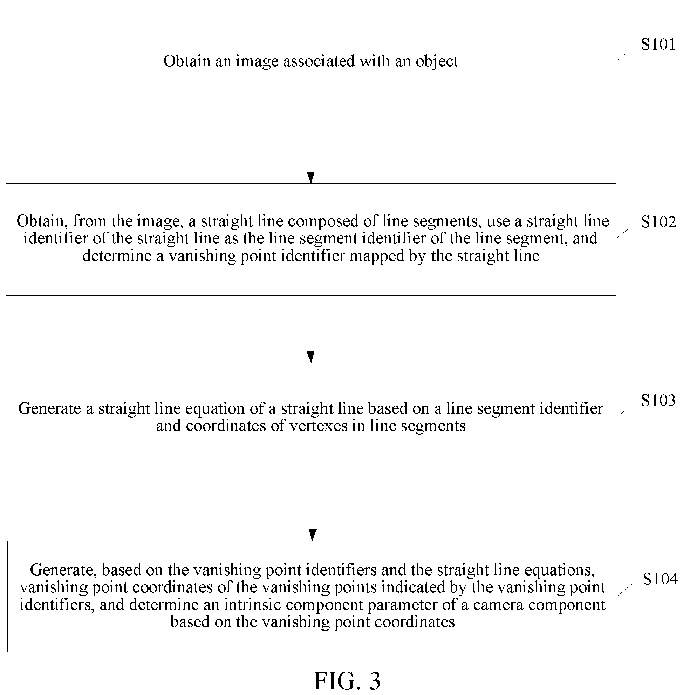

Further, FIG. 3 is a schematic flowchart I of a data processing method according to an embodiment of this application. The method may be performed by a server, or may be performed by a terminal device, and may further be performed by both the server and the terminal device. The server may be the server 20a in the embodiment corresponding to FIG. 2a, and the terminal device may be the terminal device 20b in the embodiment corresponding to FIG. 2a. For ease of understanding, in the embodiments of this application, an example in which the method is performed by the terminal device is used for description. The data processing method may include the following step S101 to step S104:
Step S101: Obtain an image associated with an object.

The image is obtained by capturing the object using a shooting component. The object includes an array of identification patterns. A bounding rectangle of the identification pattern may be regarded as an outline of the identification pattern, including 4 edges. In short, the identification pattern may include 4 edges, that is, 4 line segments. Therefore, the image may alternatively include at least part of the identification pattern in the array, and the identification pattern in the image that may be detected by using an identification pattern detection algorithm is an observable identification pattern (for example, an observable two-dimensional code).

Step S102: Obtain, from the image, a straight line composed of line segments, use a straight line identifier of the straight line as the line segment identifier of the line segment, and determine a vanishing point identifier mapped by the straight line.

It may be understood that the terminal device may use the identification pattern detection algorithm to identify the identification pattern in the image, and then connect line segments in the identification pattern that are in the same row and on the same side of the array (for example, line segments on an upper side of each of the identification patterns in a row, that is, upper edges of the identification patterns in the same row), and obtain the straight line by extending the connected line segments. For another example, the line segments in the identification pattern that are in the same column and on the same side of the array (for example, a left side of each identification pattern in a row) are connected, and the straight line is obtained by extending the connected line segments. In addition, when the identification pattern in the image is identified, the terminal device may generate vertex coordinates of a vertex in the identification pattern in the image.

It is to be understood that the identification pattern detection algorithm may be any open source algorithm, for example, an ArUco (Augmented Reality University of Cordoba) identification pattern detection algorithm in opencv (a cross-platform computer vision and machine learning software library released based on the Apache 2.0 license (open source)). The execution process of the ArUco identification pattern detection algorithm is candidate box detection, quadrilateral identification, target filtering, and vertex correction. After the detection by using the identification pattern detection algorithm, the identifiers of identification patterns and two-dimensional coordinates of four vertexes of each identification pattern may be obtained.

It may be understood that the terminal device may assign the identifier to the identification pattern, and store, in a first table (that is, a table T₁), the identifier of the identification pattern in association with the line segment identifier of the line segment included in the identification pattern. Therefore, the table T₁ may be used to query for the line segment identifier (that is, the straight line identifier) of the line segment. An identifier of an identification pattern may be used to find the four line segment identifiers respectively corresponding to the straight line where the upper edge is located, the straight line where a lower edge is located, the straight line where a left edge is located, and the straight line where a right edge is located. To be specific, an identifier of the identification pattern may be used to find the identifiers of the straight lines (i.e., the straight line identifiers) to which the straight line where the upper edge is located, the straight line where the lower edge is located, the straight line where the left edge is located, and the straight line where the right edge is located respectively belong.

It may be understood that the terminal device may store, in a second table (that is, a table T₂), the identifier of the straight line in association with the vanishing point identifier mapped by the straight line. Therefore, the table T₂ may be used to query for the vanishing point identifier by using the identifier of the straight line, and one vanishing point identifier may be found by using one identifier of the straight line. The terminal device may divide the straight line into three groups of straight lines perpendicular to each other, based on the x-axis, y-axis, and z-axis. Each group of straight lines correspond to a vanishing point identifier.

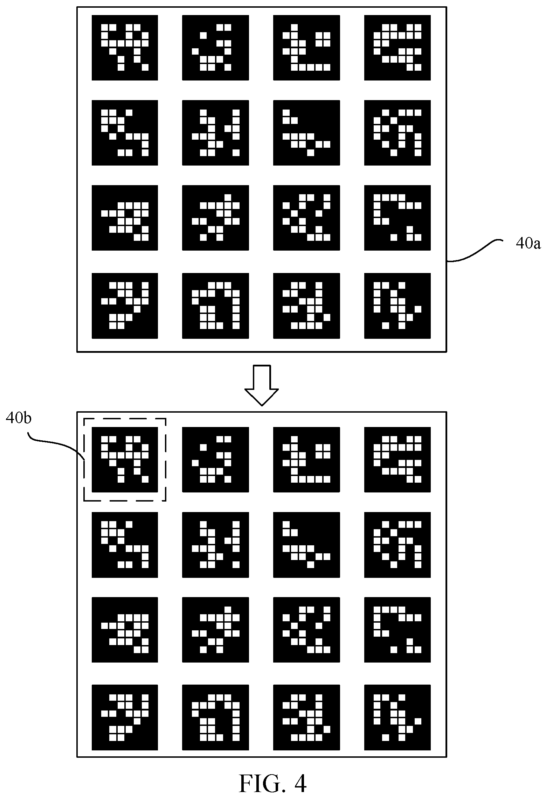

For ease of understanding, FIG. 4 is a schematic diagram of a scene for identifying an identification pattern according to embodiments of this application. A plane region 40a shown in FIG. 4 may be a plane region including any two coordinate axes, and a square region in the plane region 40a is an identification pattern. The identification pattern may be detected from the plane region 40a by using an identification pattern detection algorithm, and the detected identification pattern may be marked by a rectangular frame. For example, the identification pattern detected from the plane 40a may be an identification pattern 40b.

Step S103: Generate a straight line equation of a straight line based on a line segment identifier and coordinates of vertexes in line segments.

Specifically, the terminal device may determine, based on the line segment identifier, the straight line to which the line segments belongs, and use the coordinates of the vertexes in the line segments as key point coordinates on the straight line. Further, the terminal device may generate the straight line equation of the straight line based on the key point coordinates.

The terminal device may generate a straight line fitting matrix based on the quantity of key points and a quantity of straight lines, and store, in the straight line fitting matrix, the identifiers of the straight lines in association with the coordinates of key points on the straight lines. The straight line fitting matrix may be expressed as Dₗᵢₙₑ, the straight line fitting matrix Dₗᵢₙₑ is a two-dimensional matrix, a height of the matrix is a quantity of straight lines, that is, Nₘₐₓ = 4*(a+b+c), a width is N, and each element in the straight line fitting matrix Dₗᵢₙₑ is a pair of real number coordinates. A row of the straight line fitting matrix Dₗᵢₙₑ represents two-dimensional coordinates of vertexes on one straight line. The straight line fitting matrix Dₗᵢₙₑ may be used for generating the straight line equations of the straight lines based on the key point coordinates in step S103.

The terminal device needs to initialize each element in the straight line fitting matrix Dₗᵢₙₑ before obtaining the key point coordinates on the straight lines. For example, in this embodiment of this application, each element in the straight line fitting matrix Dₗᵢₙₑ may be initialized to [-1, -1]. It is to be understood that an initialized value of each element in the straight line fitting matrix Dₗᵢₙₑ is not limited in embodiments of this application.

It may be understood that the terminal device may generate a straight line equation storage matrix based on the straight line quantity of straight lines and a quantity of straight line parameters in the straight line equations, and store, in the straight line equation storage matrix, the straight line identifiers in association with the straight line parameters corresponding to the straight lines. The straight line equation storage matrix may be expressed as Dₚₒᵢₙₜ, the straight line equation storage matrix Dₚₒᵢₙₜ is a two-dimensional matrix, a height of the matrix is a quantity of all straight lines, that is, Nₘₐₓ = 4*(a+b+c), a width is 3, and each element in the straight line equation storage matrix Dₚₒᵢₙₜ is a real number. A row of the straight line equation storage matrix Dₚₒᵢₙₜ represents straight line parameters in an straight line equation of a straight line, and a straight line equation of a straight line may be determined by using three straight line parameters. The straight line equation storage matrix Dₚₒᵢₙₜ may be used to perform the step of generating, based on the vanishing point identifier and the straight line equation, the vanishing point coordinates of the vanishing point indicated by the vanishing point identifier in step S104.

The terminal device needs to initialize each element in the straight line equation storage matrix Dₚₒᵢₙₜ before obtaining the straight line parameter in the straight line equation. For example, in this embodiment of this application, each element in the straight line equation storage matrix Dₚₒᵢₙₜ may be initialized to -1. It is to be understood that an initialized value of each element in the straight line equation storage matrix Dₚₒᵢₙₜ is not limited in this embodiment of this application.

In this embodiment of this application, a plane region (e.g., a right wall) perpendicular to an x-axis may be referred to as a plane region x, a plane region (e.g., a left wall) perpendicular to a y-axis may be referred to as a plane y, and a plane region (e.g.,the ground) perpendicular to a z-axis may be referred to as a plane region z. c (a z-axis direction) times b (a y-axis direction) identification patterns exist on the plane region x, a number of c (the z-axis direction) times a (an x-axis direction) identification patterns exist on the plane region y, and a (the x-axis direction) times b (the y-axis direction) identification patterns exist on the plane z. The maximum quantity of identification patterns may be expressed as max (a, b, c), and the maximum quantity of key points (that is, N) may be expressed as N = 2*max (a, b, c). It may be understood that the maximum quantity of key points may represent a maximum quantity of vertexes on the straight line, or may represent a maximum quantity of straight lines that may be used for a single vanishing point.

For ease of understanding, an example in which quantities of identification patterns for the plane region x and the plane region y in the z-axis direction are both c is used for description in this embodiment of this application, an example in which quantities of identification patterns for the plane region z and the plane region x in the y-axis direction are both b is used for description in this embodiment of this application, and an example in which quantities of identification patterns for the plane region z and the plane region y in the x-axis direction are both a is used for description in this embodiment of this application.

In all embodiments of the present disclosure, the quantities of identification patterns for the plane region x and the plane region y in the z-axis direction may be different, the quantities of identification patterns for the plane region z and the plane region x in the y-axis direction may be different, and the quantities of identification patterns for the plane region z and the plane region y in the x-axis direction may be different. In this case, c represents a larger value of the quantities of identification patterns for the plane region x and the plane region y in the z-axis direction, b represents a larger value of the quantities of identification patterns for the plane region z and the plane region x in the y-axis direction, and a represents a larger value of the quantities of identification patterns for the plane region z and the plane region y in the x-axis direction.

It may be understood that in this application, calculation of the vanishing point coordinates may be accelerated based on table lookup, and the tables involved in this application may include the table T₁, the table T₂, the straight line fitting matrix Dₗᵢₙₑ, and the straight line equation storage matrix Dₚₒᵢₙₜ. All of the identifiers involved in table creation, such as the identifier, the straight line identifier, and the vanishing point identifier do not necessarily have to be labeled as described in this application, and may also be labeled by using another labeling method.

Therefore, the initialization method in all embodiments of this application may accelerate the speed of fitting the straight lines, avoid repeated scanning of the straight line to which a two-dimensional code vertex belongs, and repeated occupation and release of internal memory. A maximum quantity N of points (that is, the maximum quantity of key points) on the straight line may be used to initialize internal memory space for fitting the straight lines, and allocate the maximum possible memory at one time.

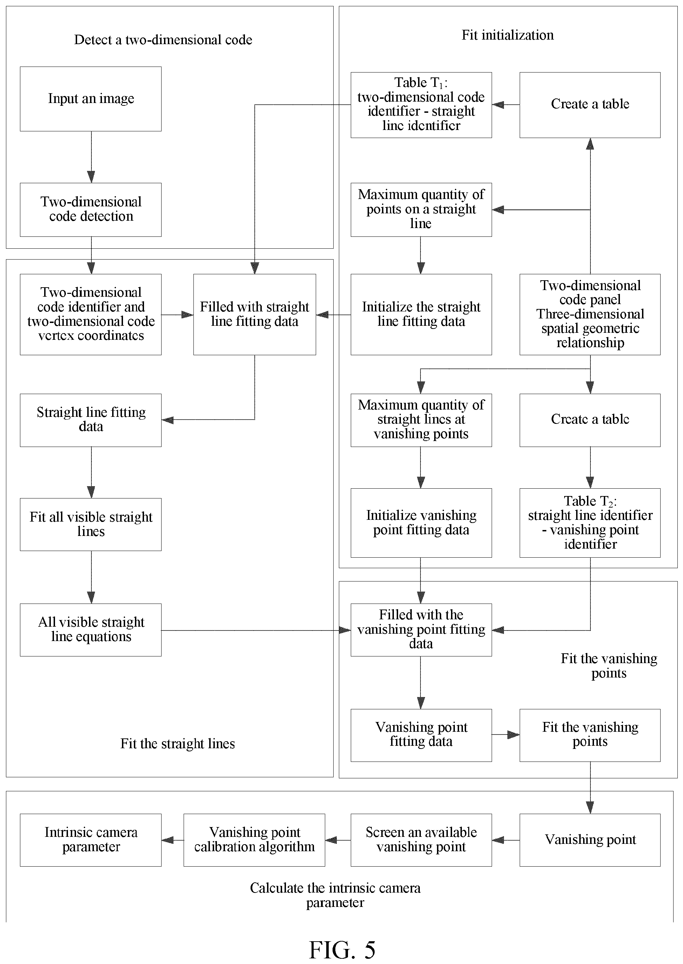

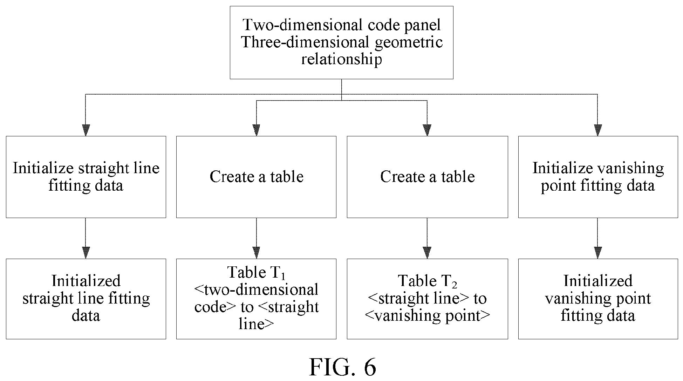

For ease of understanding, FIG. 6 is a schematic flowchart of internal memory preallocation according to an embodiment of this application. The schematic flowchart shown in FIG. 6 may correspond to a step of fitting initialization in all embodiments corresponding to FIG. 5. In the step of fitting initialization, a table T₁, a table T₂, an initialized straight line fitting matrix, and an initialized straight line equation storage matrix may be generated. Because the table T₁, the table T₂, the initialized straight line fitting matrix, and the initialized straight line equation storage matrix do not change with a placement position of a two-dimensional code green screen (that is, a two-dimensional code panel), the step of fitting initialization only needs to be performed once when the placement position of the two-dimensional code green screen does not change.

As shown in FIG. 6, the terminal device may create the table T₁ and the table T₂ based on a three-dimensional spatial geometric relationship of the two-dimensional codes of an object. The table T₁ may be used to store a relationship between a two-dimensional code identifier and a straight line identifier, and the table T₂ may be used to store a relationship between the straight line identifiers and a vanishing point identifier. For example, a two-dimensional code having a two-dimensional code identifier of 1 may include four line segments. Line segment identifiers of the four line segments are respectively determined by a straight line to which each line segment belongs. For example, straight line identifiers of the straight lines to which the four line segments belong may be a straight line identifier K₁, a straight line identifier K₂, a straight line identifier K₃, and a straight line identifier K₄. In this way, the terminal device may store, in the table T₁, the two-dimensional code identifier 1 in association with the straight line identifier K₁, the straight line identifier K₂, the straight line identifier K₃, and the straight line identifier K₄. For another example, the terminal device may store, in the table T₂, the straight line identifier K and a vanishing point identifier B of a vanishing point mapped by the straight line having the straight line identifier of K.

As shown in FIG. 6, the terminal device may initialize straight line fitting data based on a maximum quantity of points on a straight line (that is, a maximum quantity of vertexes), and generate the straight line fitting matrix. Each element in the straight line fitting matrix may store an initialized value. A row of the straight line fitting matrix is a maximum quantity of straight lines (that is, a maximum quantity of straight lines), and a column thereof is initialized key point coordinates on the straight line (for example, [-1, -1]).

As shown in FIG. 6, the terminal device may initialize vanishing point fitting data based on the maximum quantity of straight lines at the vanishing points (that is, the maximum quantity of straight lines) and generate a straight line equation storage matrix. Each element of the straight line equation storage matrix may store an initialized value. A row of the straight line equation storage matrix is the maximum quantity of straight lines, and a column thereof is an initialized straight line parameter (for example, -1) in a straight line equation of the straight line.

Step S104: Generate, based on the vanishing point identifiers and the straight line equations, vanishing point coordinates of the vanishing points indicated by the vanishing point identifiers, and determine an intrinsic component parameter of a camera component based on the vanishing point coordinates.

For ease of understanding, FIG. 5 is a schematic flowchart of determining an intrinsic component parameter according to an embodiment of this application. As shown in FIG. 5, a method for determining an intrinsic camera parameter based on an image provided in embodiments of this application may be divided into five steps: detecting a two-dimensional code, fitting initialization, fitting straight lines, fitting vanishing points, and calculating an intrinsic camera parameter. An example in which an identification pattern is the two-dimensional code is used for description.

As shown in FIG. 5, in the step of detecting the two-dimensional code, the terminal device may obtain an image (that is, an input image) captured by using a camera component, and detect a two-dimensional code of the input image by using a two-dimensional code detection algorithm, to obtain a two-dimensional code identifier of the two-dimensional code in the input image and two-dimensional code vertex coordinates (that is, coordinates of vertexes in the two-dimensional codes).

As shown in FIG. 5, in the step of fitting initialization, the terminal device may create a table T₁ and a table T₂ based on a three-dimensional spatial geometric relationship of the two-dimensional codes of an object. The table T₁ may be used to store a relationship between a two-dimensional code identifier and a straight line identifier, and the table T₂ may be used to store a relationship between the straight line identifiers and a vanishing point identifier. In addition, the terminal device may further initialize straight line fitting data based on a maximum quantity of points on a straight line (that is, a maximum quantity of vertexes) to generate a straight line fitting matrix, and initialize vanishing point fitting data based on a maximum quantity of straight lines at vanishing points (that is, a maximum quantity of straight lines) to generate a straight line equation storage matrix. Each element in the straight line fitting matrix and the straight line equation storage matrix may store an initialized value.

As shown in FIG. 5, in the step of fitting the straight lines, the terminal device may establish a relationship between the two-dimensional code vertex coordinates and the straight line identifier based on the two-dimensional code identifier, then use the two-dimensional code vertex coordinates and the straight line identifier as the straight line fitting data, and fill the straight line fitting matrix with the straight line fitting data. Further, the terminal device may fit all visible straight lines (that is, the straight lines) based on the straight line fitting data in the straight line fitting matrix, to obtain all visible straight line equations (that is, straight line equations of the straight lines).

As shown in FIG. 5, in the step of fitting the vanishing point, the terminal device may use straight line parameters in all of the straight line equations as the vanishing point fitting data, and fill the straight line equation storage matrix with the vanishing point fitting data. Further, the terminal device may divide the vanishing point fitting data in the straight line equation storage matrix based on the vanishing point identifier, to obtain the vanishing point fitting data corresponding to each vanishing point identifier, and then obtain vanishing point coordinates of the vanishing point corresponding to the respective vanishing point identifier based on the vanishing point fitting data.

As shown in FIG. 5, in the step of calculating the intrinsic camera parameter, the terminal device may screen the vanishing point coordinates to obtain available vanishing point coordinates, and then obtain the intrinsic component parameter (that is, the intrinsic camera parameter) of the camera component based on a vanishing point calibration algorithm. The vanishing point calibration algorithm may be applicable to a case in which two or three vanishing point coordinates exist.

It may be understood that in this embodiment of this application, a value obtained with the high-precision Zhang Zhengyou's calibration method may be used as a truth value, to obtain a relative error of the intrinsic component parameter generated in this embodiment of this application. The results are shown in Table 1.

**Table 1**

| | Zhang Zhengyou's camera calibration method | Camera calibration method in this application | Relative error |
|---|---|---|---|
| Optical center abscissa uₓ | 953.09216 | 937.23175 | 1.66% |
| Optical center ordinate u_{y} | 542.18050 | 546.13177 | 0.73% |
| x-direction focal length fₓ | 761.28896 | 773.72 | 1.63% |
| y-direction focal length *f_{y}* | 760.02085 | 773.72 | 1.80% |

As shown in Table 1, an optical center may include an optical center abscissa uₓ and an optical center ordinate u_{y}. A focal length may include a x-direction focal length fₓ and a y-direction focal length f_{y}. For the four parameters shown in Table 1, errors in this embodiment of this application and the Zhang Zhengyou's calibration method are both within 2%. The x-direction focal length fₓ and the y-direction focal length f_{y} in this embodiment of this application are the same.

On a single-core central processing unit (CPU), an overall time consumed to obtain the straight line, calculate the vanishing point, and calculate the intrinsic component parameter in this application is less than 0.25 milliseconds, which does not occupy hardware resources. When this application is applied to virtual-real fusion, only a small quantity of machine resources are occupied, and another virtual-real fusion related algorithm is not stalled.

It may be learned that in this embodiment of this application, a single image obtained by the camera component shooting a object may be obtained, parallel lines (that is, the straight lines) are detected in real time in the image, coordinates of the vanishing points mapped by the parallel lines may be calculated, and then the intrinsic component parameter of the camera component is generated based on the intrinsic component parameter calibration method of the vanishing point. In this way, the intrinsic component parameter of the camera component may be determined by using a single image without processing a plurality of images and without using a hardware device to calibrate the intrinsic component parameter, which may significantly reduce the costs of calibrating the intrinsic component parameter and improve efficiency of calibration.

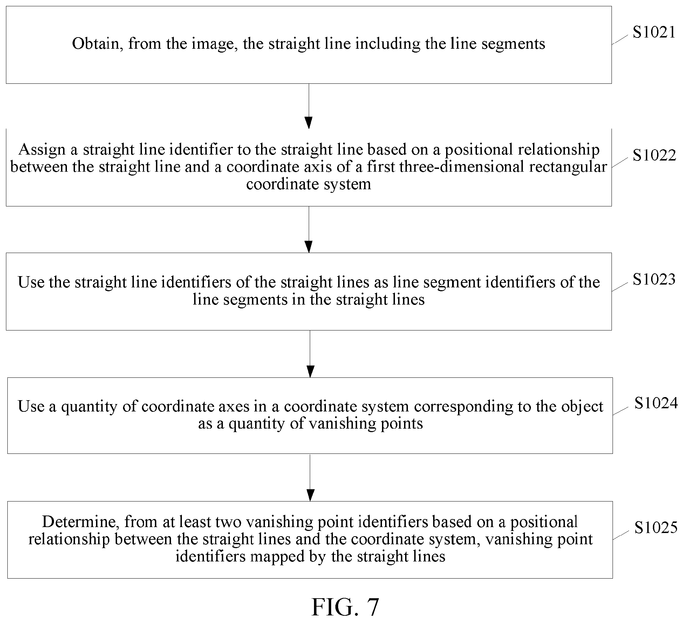

Further, FIG. 7 is a schematic flowchart II of a data processing method according to an embodiment of this application. The data processing method may include the following step S1021 to step S1025. Step S1021 to step S1025 are specific embodiments of step S102 in the embodiment corresponding to FIG. 3.

Step S1021: Obtain, from the image, the straight line including the line segments.

The straight line including the line segments is the straight line where the line segments are located. For a specific process of obtaining the straight line including line segments by the terminal device, reference may be made to the descriptions of step S102 in the embodiment corresponding to FIG. 3. Details are not described herein again.

Step S1022: Assign a straight line identifier to the straight line based on a positional relationship between the straight line and a coordinate axis of a first three-dimensional rectangular coordinate system.

Specifically, the terminal device may obtain a plane region including two coordinate axis of the first three-dimensional rectangular coordinate system. The two coordinate axes includes a first coordinate axis and a second coordinate axis, and the plane region may be any one of a plane region x, a plane region y, and a plane region z. Further, the terminal device may traverse an identification pattern in the plane region to obtain the straight line associated with the identification pattern in the plane region, and determine, as a straight line, the straight line associated with the identification pattern in the plane region. Further, the terminal device may assign a first straight line identifier to the straight line parallel to the first coordinate axis, and assign a second straight line identifier to the straight line parallel to the second coordinate axis. The first straight line identifier is sorted based on a coordinate in the second coordinate axis, and the second straight line identifier is sorted based on a coordinate in the first coordinate axis. The straight line identifiers includes a first straight line identifier and a second straight line identifier.

It may be understood that for the identification patterns on a left wall or a right wall, top, bottom, left, and right are determined based on that a person stands on the ground, and face to the left wall or the right wall. For the ground, top, bottom, left, and right are determined based on that a person stands on the right wall, and face to the identification pattern of the ground. In all embodiments of the present disclosure, for the ground, top, bottom, left, and right may be determined alternatively based on that a person stands on the left wall, and face to the identification pattern of the ground.

For the straight line of the plane region x (that is, the right wall), an index matrix Mₓ having a height of c and a width of b is constructed based on the arrangement of the identification patterns of the plane region x, and an element in an i^{th} row and a j^{th} column of the matrix is an identifier of the identification pattern in the i^{th} row and the j^{th} column on the right wall. In this way, the terminal device may assign the straight line identifiers to four vertexes included in each identification pattern while traversing the index matrix Mₓ in a column-first manner (or in a row-first manner). The assignment manner is: first assigning subscripts of 0 to (c-1) to upper straight lines of all the identification patterns in an order from the highest to the lowest; assigning subscripts of c to (2c-1) to lower straight lines of all the identification patterns in an order from the highest to the lowest; assigning subscripts of 2c to (2c+b-1) to left straight lines of all the identification patterns in an order from the leftmost to the rightmost; and then assigning subscripts of (2c+b) to (2c+2b-1) to right straight lines of all the identification patterns in an order from the leftmost to the rightmost.

For the straight line of the plane region y (that is, the left wall), an index matrix M_{y} having a height of c and a width of a is constructed based on the arrangement of the identification patterns in the plane region y, and an element in an i^{th} row and a j^{th} column of the matrix is an identifier of the identification pattern in an i^{th} row and a j^{th} column on the left wall. In this way, the terminal device may assign the straight line identifier to four points included in each identification pattern while traversing the index matrix M_{y} in a column-first manner (or in a row-first manner). The assignment manner is: first assigning subscripts of (2c+2b) to (2c+2b+c-1) to upper straight lines of all the identification patterns in an order from the highest to the lowest; assigning subscripts of 3 c+2b to (4c+2b-1) to lower straight lines of all the identification patterns in an order from the highest to the lowest; assigning subscripts of (4c+2b) to (4c+2b+a-1) to left straight lines of all the identification patterns in an order from the leftmost to the rightmost; and then assigning subscripts of (4c+2b+a) to (4c+2b+2a-1) to right straight lines of all the identification patterns in an order from the leftmost to the rightmost.

For the straight line of the plane region z (that is, the ground), an index matrix M_{z} having a height of a and a width of b is constructed based on the arrangement mode of the identification patterns in the plane z, and an element in the i^{th} row and the j^{th} column of the matrix is an identifier of the identification pattern in an i^{th} row and a j^{th} column on the ground. In this way, the terminal device may assign the straight line identifier to four points included in each identification pattern while traversing the index matrix M_{z} in a column-first manner (or in a row-first manner). The assignment manner is: first assigning subscripts of (4c+2b+2a) to (4c+2b+3a-1) to upper straight lines of all the identification patterns in an order from the highest to the lowest; assigning subscripts of (4c+2b+3a) to (4c+2b+4a-1) to lower straight lines of all the identification patterns in an order from the highest to the lowest; assigning subscripts of (4c+2b+4a) to (4c+3b+4a-1) to left straight lines of all the identification patterns in an order from the leftmost to the rightmost; and then assigning subscripts of (4c+3b+4a) to (4c+4b+4a-1) to right straight lines of all the identification patterns in an order from the leftmost to the rightmost.

It may be understood that the manner of assigning the straight line identifier to the straight line is not limited in the embodiments of this application. For step S 1025, reference may be made to the straight line identifier assigned in step S1022 to assign different vanishing point identifiers to the straight line. In all embodiments of the present disclosure, for example, the plane region x is used as an example for description. The terminal device may first assign subscripts of 0 to (2c-1) to the upper straight lines and the lower straight lines of all the identification patterns in an order from the highest to the lowest, and then then assign subscripts of 2c to (2c+2b-1) to the left straight lines and the right straight lines of all the identification patterns in an order from the leftmost to the rightmost.

Step S1023: Use the straight line identifiers of the straight lines as line segment identifiers of the line segments in the straight lines.

For example, the straight line S₂ includes a line segment X₁ and a line segment X₂. If the straight line identifier of the straight line S₂ is a straight line identifier K, the terminal device may use the straight line identifier K as the line segment identifier of the line segment X₁ and the line segment X₂.

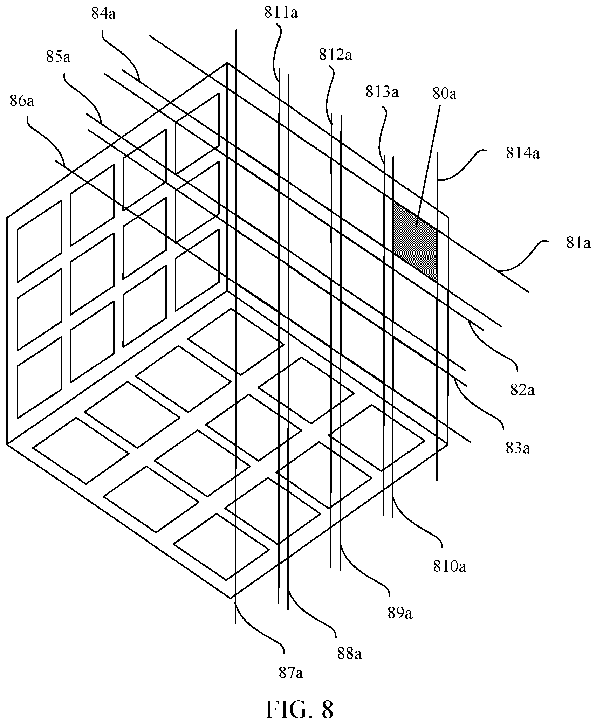

For ease of understanding, FIG. 8 is a schematic diagram of a scene for assigning a straight line identifier according to embodiments of this application. An object shown in FIG. 8 may correspond to three plane regions, and the three planes may specifically include a plane region z, a plane region y, and a plane region x. The object shown in FIG. 8 may correspond to three coordinate axes, and the three coordinate axes may specifically include an x-axis, a y-axis, and a z-axis. The plane region z is perpendicular to the z-axis, the plane region y is perpendicular to the y-axis, and the plane region x is perpendicular to the x-axis.

As shown in FIG. 8, the plane region x corresponding to the object may include one or more identification patterns. An example in which the one or more identification patterns are 12 identification patterns (that is, c times b (that is, 3 times 4) identification patterns, c represents a quantity of identification patterns of the plane region x in a z-axis direction, and b represents a quantity of identification patterns of the plane region x in a y-axis direction) is used for description. 14 straight lines may be formed by the identification patterns in the plane region x. 3 identification patterns may exist in a vertical direction of the plane region x, and therefore 6 straight lines may be formed in the vertical direction. 4 identification patterns may exist in a horizontal direction of the plane region x, and therefore 8 straight lines may be formed in the horizontal direction.

As shown in FIG. 8, the 6 straight lines in the vertical direction may specifically include a straight line 81a, a straight line 82a, a straight line 83a, a straight line 84a, a straight line 85a, and a straight line 86a. The 8 straight lines in the horizontal direction may specifically include a straight line 87a, a straight line 88a, a straight line 89a, a straight line 810a, a straight line 811a, a straight line 812a, a straight line 813a, and a straight line 814a. The terminal device may assign the straight line identifiers to 14 straight lines of the plane region x based on the description of step S1022. For example, the straight line identifier assigned to the straight line 81a is 1, the straight line identifier assigned to the straight line 82a is 2, the straight line identifier assigned to the straight line 83a is 3, the straight line identifier assigned to the straight line 84a is 4, the straight line identifier assigned to the straight line 85a is 5, ..., the straight line identifier assigned to the straight line 813a is 13, and the straight line identifier assigned to the straight line 814a is 14.

As shown in FIG. 8, the 12 identification patterns of the plane region x may include an identification pattern 80a. The upper straight line of the identification pattern 80a is used to form the straight line 81a, the lower straight line is used to form the straight line 84a, the left straight line is used to form the straight line 810a, and the right straight line is used to form the straight line 814a. Therefore, a line segment identifier of the upper straight line of the identification pattern 80a is 1, the line segment identifier of the lower straight line is 4, the straight line identifier of the left straight line is 10, and the straight line identifier of the right straight line is 14.

Step S1024: Use a quantity of coordinate axes in a coordinate system corresponding to the object as a quantity of vanishing points.

The quantity of vanishing points is at least two. As shown in FIG. 8, the quantity of coordinate axes corresponding to the object is three, that is, the quantity of coordinate axes in the coordinate system corresponding to the object is three. The coordinate system corresponding to the object may be the first three-dimensional rectangular coordinate system or include two coordinate axes of the first three-dimensional rectangular coordinate system. Therefore, the quantity of vanishing points is three. In all embodiments of the present disclosure, in a case that the quantity of coordinate system corresponding to the object is two, the quantity of vanishing points is two. In all embodiments of the present disclosure, in a case that the quantity of coordinate axes in the coordinate system corresponding to the object is three, if no identification pattern does not exist in any two of the plane region x, the plane region y, or the plane region z, the quantity of vanishing points is two.

Step S1025: Determine, from at least two vanishing point identifiers based on a positional relationship between the straight lines and the coordinate system, vanishing point identifiers mapped by the straight lines.

A vanishing point identifier corresponds to a vanishing point. The positional relationship between the straight lines and the coordinate system is determined by step S1022.

For the straight line in the plane region x, the terminal device may assign the straight lines having the straight line identifiers of 0 to (c-1) to a y-axis vanishing point 1, that is, a vanishing point l_{y}; assign the straight lines having the straight line identifiers of c to (2c-1) to the y-axis vanishing point 1, that is, the vanishing point l_{y}; assign the straight lines having the straight line identifiers of 2c to (2c+b-1) to a z-axis vanishing point 2, that is, a vanishing point l_{z}; and assign the straight lines having the straight line identifiers of (2c+b) to (2c+2b-1) to the z-axis vanishing point 2, that is, the vanishing point l_{z}.

For the straight lines in the plane region y, the terminal device may assign the straight lines having the straight line identifiers of (2c+2b) to (2c+2b+c-1) to an x-axis vanishing point 0, that is, a vanishing point lₓ; assign the straight lines having the straight line identifiers of (3c+2b) to (4c+2b-1) to the x-axis vanishing point 0, that is, the vanishing point lₓ; assign the straight lines having the straight line identifiers of (4c+2b) to (4c+2b+a-1) to the z-axis vanishing point 2, that is, the vanishing point l_{z}; and assign the straight lines having the straight line identifiers of (4c+2b+a) to (4c+2b+2a-1) to the z-axis vanishing point 2, that is, the vanishing point l_{z}.

For the straight line in the plane region z, the terminal device may assign the straight lines having the straight line identifiers of (4c+2b+2a) to (4c+2b+3a-1) the y-axis vanishing point 1, that is, the vanishing point l_{y}; assign the straight lines having the straight line identifiers of (4c+2b+3a) to (4c+2b+4a-1) to the y-axis vanishing point 1, that is, the vanishing point l_{y}; assign the straight lines having the straight line identifiers of (4c+2b+4a) to (4c+3b+4a-1) to the x-axis vanishing point 0, that is, the vanishing point lₓ; and assign the straight lines having the straight line identifiers of (4c+3b+4a) to (4c+4b+4a-1) to the x-axis vanishing point 0, that is, the vanishing point lₓ.

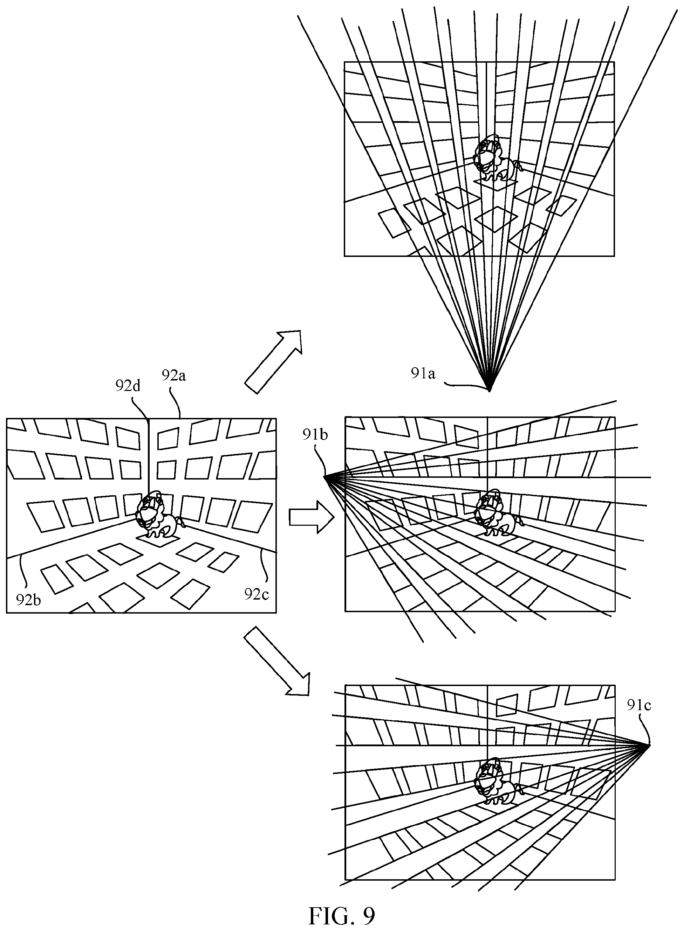

For a specific process of determining the vanishing point identifier mapped by the straight line in the plane region x, the plane region y, and the plane region z, reference may be made to FIG. 9. FIG. 9 is a schematic diagram of a scene for determining an identifier of a vanishing point according to all embodiments of this application. An image 92a shown in FIG. 9 may correspond to three coordinate axes. The three coordinate axes may be a coordinate axis 92b, a coordinate axis 92c, and a coordinate axis 92d. The coordinate axis 92b may also be referred to as an x-axis, the coordinate axis 92c may also be referred to as a y-axis, and the coordinate axis 92d may also be referred to as a z-axis.

It may be understood that the terminal device may map straight lines parallel to the same coordinate axis to the same vanishing point identifier. As shown in FIG. 9, the vanishing point identifier mapped by the straight line parallel to the coordinate axis 92b is a vanishing point identifier 91c, the vanishing point identifier mapped by the straight line parallel to the coordinate axis 92c is a vanishing point identifier 91b, and the vanishing point identifier mapped by the straight line parallel to the coordinate axis 92d is a vanishing point identifier 91a. A straight line quantity of straight lines parallel to the coordinate axis 92b is 12, the straight line quantity of straight lines parallel to the coordinate axis 92c is 14, and the straight line quantity of straight lines parallel to the coordinate axis 92d is 16.

It may be learned that in all embodiments of this application, the straight line including the line segments may be obtained from the image, the straight line identifier is assigned to the straight line based on a positional relationship between the straight line and the spatial coordinate axis, and then the straight line identifier of the straight line is used as the line segment identifier of the line segment that constitutes the straight line. It may be understood that the vanishing point identifier mapped by the straight line may be determined from at least two vanishing point identifiers based on the positional relationship between the straight line and the spatial coordinate axis. The line segment identifier may be stored in the first table, the vanishing point identifier may be stored in the second table, and a speed of calibrating an intrinsic component parameter in subsequent steps may be increased by using the first table and the second table.

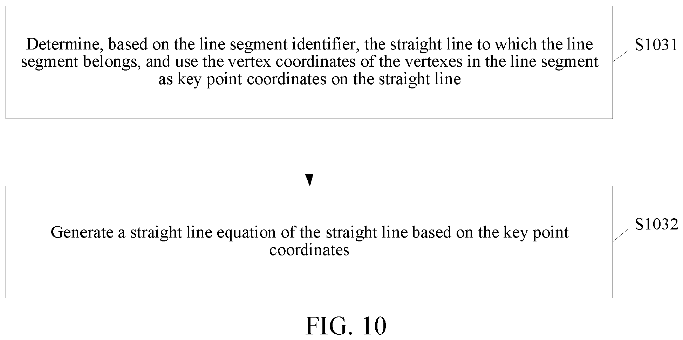

Further, FIG. 10 is a schematic flowchart III of a data processing method according to an embodiment of this application. The data processing method may include the following step S1031 to step S1032. Step S1031 to step S1032 are specific embodiments of step S103 in the embodiment corresponding to FIG. 3.

Step S1031: Determine, based on the line segment identifier, the straight line to which the line segment belongs, and use the vertex coordinates of the vertexes in the line segment as key point coordinates on the straight line.

Specifically, the terminal device may obtain, from the first table based on the identifier of the identification pattern, the line segment identifier of the line segment of the identification pattern. The straight line includes a straight line Sᵢ, where i may be a positive integer, and i is less than or equal to a straight line quantity of straight lines. Further, if the line segment identifier obtained from the first table is a straight line identifier of the straight line Sᵢ, the terminal device may use the straight line Sᵢ as the straight line to which the line segment belongs. Further, the terminal device may obtain vertex coordinates of a vertex in the line segment. The vertex includes a first vertex and a second vertex, and the first vertex and the second vertex are two endpoints of the line segment. Further, the terminal device may use the vertex coordinates of the first vertex and the vertex coordinates of the second vertex as key point coordinates on the straight line Sᵢ to which the line segment belongs.

It may be understood that the terminal device may fill data (that is, a straight line fitting matrix Dₗᵢₙₑ) for fitting the straight lines based on the key point coordinates. The terminal device may initialize actual quantities of points (that is, the quantity of key point coordinates on the straight line) of all straight lines to 0. The actual quantity of points of a j^{th} straight line is denoted as Nⱼ (that is, an initial value of Nⱼ is 0), and then the detected identification patterns are processed in sequence as follows. The identifier (e.g., a serial number) of a current identification pattern is i, and a table T₁ is queried for line segment identifiers corresponding to four edges of the identification pattern having the identifier of i. For the four edges of the identification pattern, that is, an upper edge, a lower edge, a left edge, and a right edge, the following processing is performed in sequence. The straight line identifier of the straight line where the current edge is located is recorded is j. The actual quantity of points Nⱼ of the straight line j is obtained. Two-dimensional coordinates of an endpoint 1 of the edge are extracted, and a j^{th} row and an Nⱼ^{th} column of the straight line fitting matrix Dₗᵢₙₑ are filled with the two-dimensional coordinates. Nⱼ is increased by 1. To be specific, the quantity of key point coordinates on the straight line having the straight line identifier of j is increased by 1. Two-dimensional coordinates of an endpoint 2 of the edge are extracted, and a j^{th} row and an Nⱼ^{th} column of the straight line fitting matrix Dₗᵢₙₑ are filled with the two-dimensional coordinates. Nⱼ is increased by 1.

The endpoint 1 is a first endpoint, and the endpoint 2 is a second endpoint. For a vertical straight line, the first endpoint may be located above the second endpoint. For a horizontal straight line, the first endpoint may be located to the left of the second endpoint. In all embodiments of the present disclosure, for the vertical straight line, the first endpoint may be located below the second endpoint. For the horizontal straight line, the first endpoint may be located to the right of the second endpoint.

Step S1032: Generate a straight line equation of the straight line based on the key point coordinates.

Specifically, the terminal device may obtain the key point coordinates on the straight line Sᵢ from the straight line fitting matrix, average key point parameters in the key point coordinates on the straight line Sᵢ to obtain an average key point parameter corresponding to the straight line Sᵢ, and generate a parameter matrix corresponding to the straight line Sᵢ based on the average key point parameter corresponding to the straight line Sᵢ and the key point parameter corresponding to the straight line Sᵢ. Further, the terminal device may perform singular value decomposition (SVD) on the parameter matrix corresponding to the straight line Sᵢ to obtain a dominant eigenvector matrix corresponding to the straight line Sᵢ. Further, the terminal device may obtain a parametric equation corresponding to the straight line Sᵢ, determine the straight line parameter in the parametric equation of the straight line Sᵢ based on the matrix parameter in the dominant eigenvector matrix corresponding to the straight line Sᵢ, and use the parametric equation that determines the straight line parameter as the straight line equation of the straight line Sᵢ.

It may be understood that if the quantity of key point coordinates on the straight line is not 0, the terminal device may extract all of the key point coordinates of the straight line on the straight line fitting matrix Dₗᵢₙₑ, and fit straight line equation parameters of the straight line (that is, the straight line parameter) by using the obtained key point coordinates. A current straight line label is denoted as i. A parametric equation of a straight line labeled as i is denoted as aᵢx+bᵢy+cᵢ=0. Elements in an i^{th} row and a j^{th} column of the straight line fitting matrix Dₗᵢₙₑ are denoted as two-dimensional coordinates $\left[{d}_{i , j}^{x}, {d}_{i , j}^{y}\right]$. A matrix Mⱼ (that is, the parameter matrix) is constructed, a height of the matrix Mⱼ is Nᵢ (that is, a quantity of key point coordinates on the straight line numbered i), and a width is 2. For a specific form of the matrix Mⱼ, reference may be made to Formula (1): ${M}_{j} = \left[\begin{matrix}{d}_{i , 0}^{x} - {\overline{x}}_{i} & {d}_{i , 0}^{y} - {\overline{y}}_{i} \\ {d}_{i , 1}^{x} - {\overline{x}}_{i} & {d}_{i , 0}^{y} - {\overline{y}}_{i} \\ ⋮ & ⋮ \\ {d}_{i , {N}_{i} - 2}^{x} - {\overline{x}}_{i} & {d}_{i , {N}_{i} - 2}^{y} - {\overline{y}}_{i} \\ {d}_{i , {N}_{i} - 1}^{x} - {\overline{x}}_{i} & {d}_{i , {N}_{i} - 1}^{y} - {\overline{y}}_{i}\end{matrix}\right]$
where *x̅ᵢ̅* represents a first average key point parameter (that is, an average key point parameter in an x-axis direction), *y̅ᵢ̅* represents a second average key point parameter (that is, an average key point parameter in a y-axis direction), *x̅ᵢ̅* represents averaging of x-coordinates (that is, first key point parameters) of all key point coordinates on the straight line, and *y̅ᵢ̅* represents averaging of y-coordinates (that is, second key point parameters) of all key point coordinates on the straight line. *x̅ᵢ̅* and *y̅ᵢ̅* may be collectively referred to as the average key point parameter corresponding to the straight line, and the first key point parameter and the second key point parameter may be collectively referred to as the key point parameter in the key point coordinates. For specific forms of *x̅ᵢ̅* and *y̅ᵢ̅*, reference may be made to Formula (2) and Formula (3): ${\overline{x}}_{i} = \frac{{\sum }_{j = 0}^{{N}_{i} - 1} {d}_{i , j}^{x}}{{N}_{i}}$ ${\overline{y}}_{i} = \frac{{\sum }_{j = 0}^{{N}_{i} - 1} {d}_{i , j}^{y}}{{N}_{i}}$
where Nᵢ may represent the quantity of key point coordinates on the straight line. The SVD is performed on the matrix Mⱼ, so that the matrix may decomposed into *Mⱼ* =*U*Σ*V^{I}*. It is to be understood that a specific process of the SVD is not limited in the embodiments of this application. For example, SVD of opencv may be used in the embodiments of this application. V obtained by performing the SVD on the matrix Mⱼ is the dominant eigenvector matrix. The dominant eigenvector matrix is an orthogonal matrix. A parameter aᵢ, a parameter bᵢ, and a parameter cᵢ of the straight line equation may be calculated based on the dominant eigenvector matrix. For specific forms of the parameter aᵢ, the parameter bᵢ, and the parameter cᵢ, reference may be made to Formula (4), Formula (5), and Formula (6): ${a}_{i} = {V}_{1 , 0}$ ${b}_{i} = {V}_{1 , 1}$ ${c}_{i} = - \left({a}_{i}{\overline{x}}_{i}+{b}_{i}{\overline{y}}_{i}\right)$
where the parameter bᵢ may be an element in a 1^{st} row and a 0^{th} column of the dominant eigenvector matrix *V*. The parameter bᵢ may be an element in a 1^{st} row and a 1^{st} column of the dominant eigenvector matrix V A size of the dominant eigenvector matrix V is 2*2. The parameter aᵢ and the parameter bᵢ may be collectively referred to as matrix parameters in the dominant eigenvector matrix. The parameter aᵢ, the parameter bᵢ, and the parameter cᵢ may be collectively referred to as the straight line parameters of the straight line. In this way, the terminal device may configure the parameter aᵢ to an i^{th} row and a 0^{th} column of a straight line equation storage matrix Dₚₒᵢₙₜ, configure the parameter bᵢ to an i^{th} row and a 1^{st} column of the straight line equation storage matrix Dₚₒᵢₙₜ, and configure the parameter cᵢ to an i^{th} row and a 2^{nd} column of the straight line equation storage matrix Dₚₒᵢₙₜ. To be specific, the parameter aᵢ, the parameter bᵢ, and the parameter cᵢ are used as the straight line parameters in the parametric equation. It is to be understood that the method for solving the parametric equation in the embodiments of this application is not limited to the SVD, and other methods may also be used.

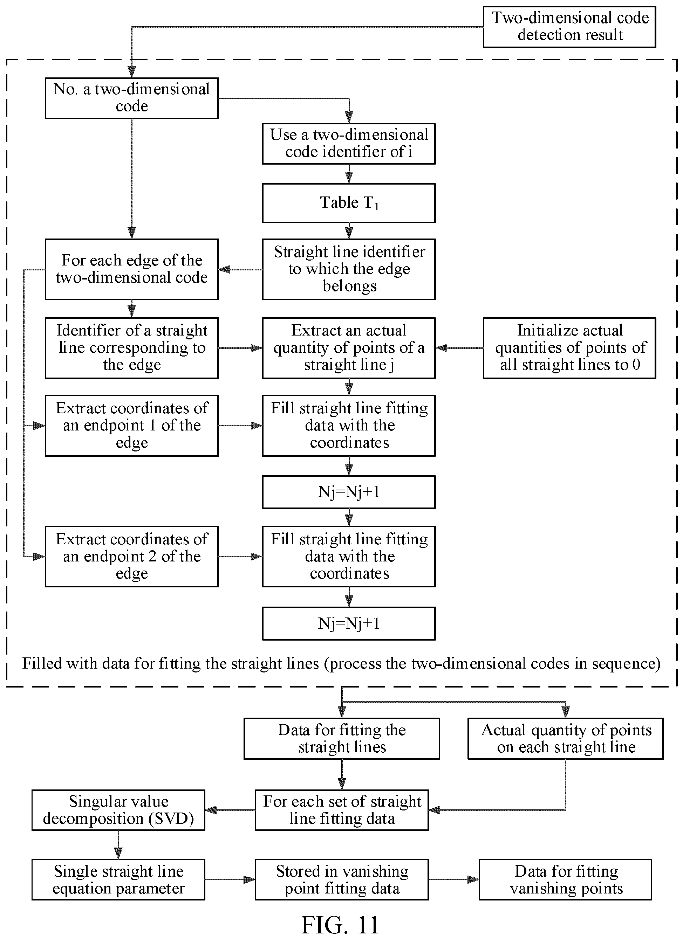

For ease of understanding, FIG. 11 is a schematic flowchart of determining a straight line equation according to an embodiment of this application. As shown in FIG. 11, the terminal device may obtain a two-dimensional code detection result for an image, and the two-dimensional code detection result may include a two-dimensional code identifier and two-dimensional code vertex coordinates. Further, the terminal device may traverse detected two-dimensional codes, that is, obtain No. a two-dimensional code, then obtain a two-dimensional code identifier i of the No. a two-dimensional code, and obtain, from a table T₁, a straight line identifier (that is, a line segment identifier of a line segment) to which an edge having the two-dimensional code identifier of i belongs.

As shown in FIG. 11, for each edge of the two-dimensional code having the two-dimensional code identifier of i, the terminal device may extract an actual quantity of points of the straight line j to which the edge belongs. The actual quantity of points may represent a quantity of key points (that is, a quantity of key point coordinates) on the straight line. The actual quantity of points of each straight line may be initialized to 0. Further, the terminal device may extract coordinates of two endpoints of one edge of the two-dimensional code having the two-dimensional code identifier of i, and fill straight line fitting data (that is, a straight line fitting matrix) with the coordinates of the two endpoints. To be specific, the terminal device may extract coordinates of the endpoint 1 of the edge and fill the straight line fitting data with the coordinates of the endpoint 1, and then extract coordinates of the endpoint 2 of the edge and fill the straight line fitting data with the coordinates of the endpoint 2. Different straight line fitting data is filled with the coordinates of the endpoint 1 and the coordinates of the endpoint 2. To be specific, the coordinates of the endpoint 1 and the coordinates of the endpoint 2 are used as the key point coordinates corresponding to different straight lines, and the terminal device needs to autonomously increase the actual quantity of points.

As shown in FIG. 11, after processing the two-dimensional codes in sequence and obtaining the fitting straight line data, the terminal device may generate a parameter matrix corresponding to each straight line based on the actual quantity of points of each straight line and the key point coordinates corresponding to each straight line (that is, each set of straight line fitting data), perform the SVD on the parameter matrix to obtain a single straight line equation parameter (that is, the straight line parameter corresponding to each straight line), and then store the straight line parameter in vanishing point fitting data (that is, the straight line fitting matrix). The straight line parameter is used for fitting data of a vanishing point.

It may be seen that in this embodiment of this application, the straight line to which the line segment belongs may be determined based on the line segment identifier, vertex coordinates of a space vertex in the line segment are used as the key point coordinates on the straight line, and then the straight line equation of the straight line is generated based on the key point coordinates on the virtual straight line. The key point coordinates may be stored in the straight line fitting matrix. The straight line parameter of the straight line equation may be stored in a straight line equation storage matrix. The straight line fitting matrix and the straight line equation storage matrix may increase a speed of calibrating an intrinsic component parameter in subsequent steps.

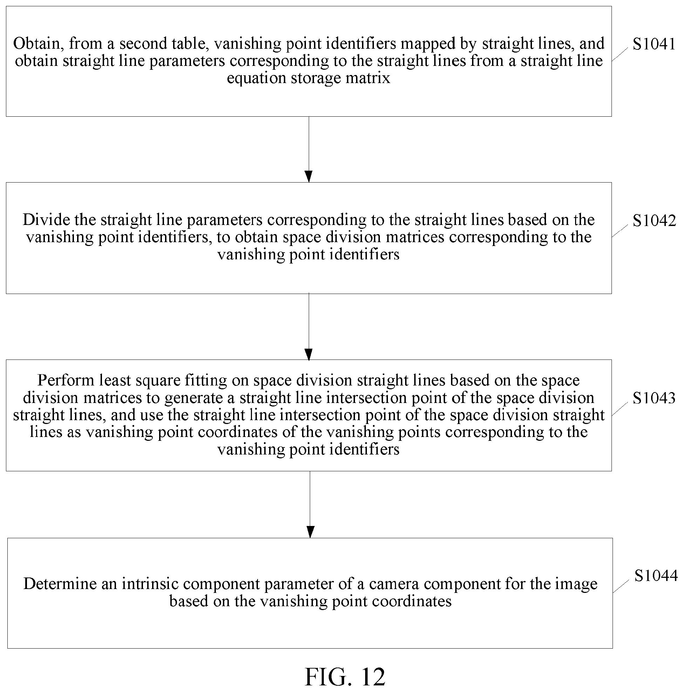

Further, FIG. 12 is a schematic flowchart IV of a data processing method according to an embodiment of this application. The data processing method may include the following step S1041 to step S1044. Step S1041 to step S1044 are specific embodiments of step S104 in the embodiment corresponding to FIG. 3.

Step S1041: Obtain, from a second table, vanishing point identifiers mapped by straight lines, and obtain straight line parameters corresponding to the straight lines from a straight line equation storage matrix.

Step S1042: Divide the straight line parameters corresponding to the straight lines based on the vanishing point identifiers, to obtain space division matrices corresponding to the vanishing point identifiers.

Specifically, the terminal device may initialize a quantity of candidate straight lines of the vanishing point identifier, and initialize a first auxiliary matrix and a second auxiliary matrix based on a maximum quantity of key points. The straight line parameters corresponding to the straight lines include a first straight line parameter, a second straight line parameter, and a third straight line parameter. Further, the terminal device may traverse the straight lines, fill the first auxiliary matrix with the first straight line parameter and the second straight line parameter in the traversed straight lines based on the vanishing point identifiers, and fill the second auxiliary matrix with the third straight line parameter in the traversed straight lines based on the vanishing point identifiers. Positions of the first straight line parameter and the second straight line parameter in the first auxiliary matrix are determined by a quantity of candidate straight lines. A position of the third straight line parameter in the second auxiliary matrix is determined by the quantity of candidate straight lines. Further, the terminal device may accumulate the quantities of candidate straight lines, and obtain a quantity of target straight lines after traversing the straight lines. Further, the terminal device may use, as a new first auxiliary matrix, a straight line parameter obtained from the first auxiliary matrix having a quantity of rows being the quantity of target straight lines, use, as a new second auxiliary matrix, a straight line parameter obtained from the second auxiliary matrix having the quantity of rows being the quantity of target straight lines, and use the new first auxiliary matrix and the new second auxiliary matrix as the space division matrices corresponding to the vanishing point identifiers.

It may be understood that the terminal device may prepare to fill a matrix Dₓ, a matrix D_{y}, a matrix D_{z}, a vector Bₓ, a vector B_{y}, and a vector B_{z} with the straight line equation storage matrix Dₚₒᵢₙₜ, and prepare to fit the data of the vanishing point. A quantity Nₓ of straight lines available for x-axis vanishing points (that is, the quantity of candidate straight lines corresponding to an x-axis) is initialized to zero, a quantity N_{y} of straight lines available for y-axis vanishing points (that is, the quantity of candidate straight lines corresponding to a y-axis) is initialized to zero, and a quantity N_{z} of straight lines available for z-axis vanishing points (that is, the quantity of candidate straight lines corresponding to a z-axis) is initialized to zero. The matrix Dₓ, the matrix D_{y}, and the matrix D_{z} are initialized to a real matrix having N (that is, a possible maximum quantity of straight lines at each vanishing point) rows and 2 columns, and the vector Bₓ, the vector B_{y}, and the vector B_{z} are N rows of vectors.

It may be understood that an initialized value of each element in the matrix Dₓ, the matrix D_{y}, the matrix D_{z}, the vector Bₓ, the vector B_{y}, and the vector B_{z} is not limited in this embodiment of this application. In this embodiment of this application, each element in the matrix Dₓ, the matrix D_{y}, the matrix D_{z}, the vector Bₓ, the vector B_{y}, and the vector B_{z} may be initialized to -1. The matrix Dₓ, the matrix D_{y}, the matrix D_{z} may be collectively referred to as the first auxiliary matrix, and the vector Bₓ, the vector B_{y}, and the vector B_{z} may be collectively referred to as the second auxiliary matrix. The matrix Dₓ is the first auxiliary matrix corresponding to the x-axis, the matrix D_{y} is the first auxiliary matrix corresponding to the y-axis, and the matrix D_{z} is the first auxiliary matrix corresponding to the z-axis. The vector Bₓ is the second auxiliary matrix corresponding to the x-axis, the vector B_{y} is the second auxiliary matrix corresponding to the y-axis, and the vector B_{z} is the second auxiliary matrix corresponding to the z-axis. The second auxiliary matrix may also be referred to as a second auxiliary vector.

Further, the terminal device may traverse each straight line. A straight line identifier of a current straight line is denoted as i, and parameters of the straight line equation are a parameter aᵢ (that is, the first straight line parameter), a parameter bᵢ (that is, the second straight line parameter), and a parameter cᵢ (that is, the third straight line parameter). Further, the terminal device may extract, from a table T₂ based on a straight line identifier i of the straight line, the vanishing point identifier to which the straight line identifier i belongs, and then fill the matrix Dₓ and the vector Bₓ, or the matrix D_{y} and the vector B_{y}, or the matrix D_{z} and the vector B_{z} with the parameter aᵢ, the parameter bᵢ, and the parameter cᵢ based on a type of the vanishing point identifier. The specific method is as follows. If the vanishing point identifier is equal to 0, an Nₓ^{th} row and a 0^{th} column of Dₓ are filled with aᵢ, an Nₓ^{th} row and a 1^{st} column of Dₓ are filled with bᵢ, and an Nₓ^{th} row of Bₓ is filled with -cᵢ. Then Nₓ=Nₓ+1, where the vanishing point identifier 0 is the vanishing point identifier corresponding to the x-axis. If the vanishing point identifier is equal to 1, an N_{y}^{th} row and a 0^{th} column of D_{y} are filled with aᵢ, an N_{y}^{th} row and a 1^{st} column of D_{y} are filled with bᵢ, and an N_{y}^{th} row of B_{y} is filled with -cᵢ. Then N_{y}=N_{y}+1, where the vanishing point identifier 1 is the vanishing point identifier corresponding to the y-axis. If the vanishing point identifier is equal to 2, an N_{z}^{th} row and a 0^{th} column of D, are filled with aᵢ, an N_{z}^{th} row and a 1^{st} column of D_{z} are filled with bᵢ, and an N_{z}^{th} row of B_{z} is filled with -cᵢ. Then N_{z}=N_{z}+1, where the vanishing point identifier 2 is the vanishing point identifier corresponding to the z-axis. In all embodiments of the present disclosure, if the actual quantity Nᵢ of points of the straight line is equal to zero, no operation is performed, and a next straight line is directly processed.

It may be understood that after all of the straight lines are traversed, the quantity of candidate straight lines may be referred to as the quantity of target straight lines. The quantity of target straight lines may represent the quantity of straight lines corresponding to the vanishing points.

Step S1043: Perform least square fitting on space division straight lines based on the space division matrices to generate a straight line intersection point of the space division straight lines, and use the straight line intersection point of the space division straight lines as vanishing point coordinates of the vanishing points corresponding to the vanishing point identifiers.

The space division straight lines are the straight lines corresponding to the space division matrices. Different space division matrices correspond to different straight lines, and different space division matrices may be used to generate different vanishing point coordinates.

It may be understood that the terminal device may respectively perform the following operations on the matrix Dₓ, the vector Bₓ, the matrix D_{y}, the vector B_{y}, the matrix D_{z}, and the vector B_{z}, and calculate the vanishing points corresponding to the x-axis, the y-axis, and the z-axis. It may be understood that if the quantity Nₓ of target straight lines is greater than or equal to 2, the x-axis vanishing point is calculated, otherwise it is considered that the x-axis vanishing point does not exist. Therefore, the terminal device may construct a matrix Pₓ and a vector Qₓ. The matrix Pₓ is first Nₓ rows of the matrix Dₓ, and the vector Qₓ is first Nₓ rows of the vector Bₓ. The matrix Pₓ may be referred to as the new first auxiliary matrix, the vector Qₓ may be referred to as the new second auxiliary matrix, and the matrix Pₓ and the matrix Qₓ may be collectively referred to as the space division matrix corresponding to the x-axis. In this way, for the calculation method of vanishing point coordinates lₓ of the x-axis vanishing point generated by the terminal device based on the space division matrix corresponding to the x-axis, reference may be made to Formula (7): ${l}_{x} = {\left({P}_{x}^{T}⋅{P}_{x}\right)}^{- 1} ⋅ \left({P}_{x}^{T}⋅{B}_{x}\right)$

It may be understood that if the quantity N_{y} of target straight lines is greater than or equal to 2, the y-axis vanishing point is calculated, otherwise it is considered that the y-axis vanishing point does not exist. Therefore, the terminal device may construct a matrix P_{y} and the vector Q_{y.} The matrix P_{y} is first N_{y} rows of the matrix D_{y}, and the vector Q_{y} is first N_{y} rows of the vector B_{y}. The matrix P_{y} may be referred to as the new first auxiliary matrix, the vector Q_{y} may be referred to as the new second auxiliary matrix, and the matrix P_{y} and the matrix Q_{y} may be collectively referred to as the space division matrix corresponding to the y-axis. In this way, for the calculation method of vanishing point coordinates l_{y} of the y-axis vanishing point generated by the terminal device based on the space division matrix corresponding to the y-axis, reference may be made to Formula (8): ${l}_{y} = {\left({P}_{y}^{T}⋅{P}_{y}\right)}^{- 1} ⋅ \left({P}_{y}^{T}⋅{B}_{y}\right)$

It may be understood that if the quantity N_{z} of target straight lines is greater than or equal to 2, the z-axis vanishing point is calculated, otherwise it is considered that the z-axis vanishing point does not exist. Therefore, the terminal device may construct a matrix P_{z} and the vector Q_{z}. The matrix P_{z} is first N_{z} rows of the matrix D_{z}, and the vector Q_{z} is first N_{z} rows of the vector B_{z}. The matrix P_{z} may be referred to as the new first auxiliary matrix, the vector Q_{z} may be referred to as the new second auxiliary matrix, and the matrix P_{z} and the matrix Q_{z} may be collectively referred to as the space division matrix corresponding to the z-axis. In this way, for the calculation method of vanishing point coordinates l_{z} of the z-axis vanishing point generated by the terminal device based on the space division matrix corresponding to the z-axis, reference may be made to Formula (9): ${l}_{z} = {\left({P}_{z}^{T}⋅{P}_{z}\right)}^{- 1} ⋅ \left({P}_{z}^{T}⋅{B}_{z}\right)$

Step S1044: Determine an intrinsic component parameter of a camera component for the image based on the vanishing point coordinates.

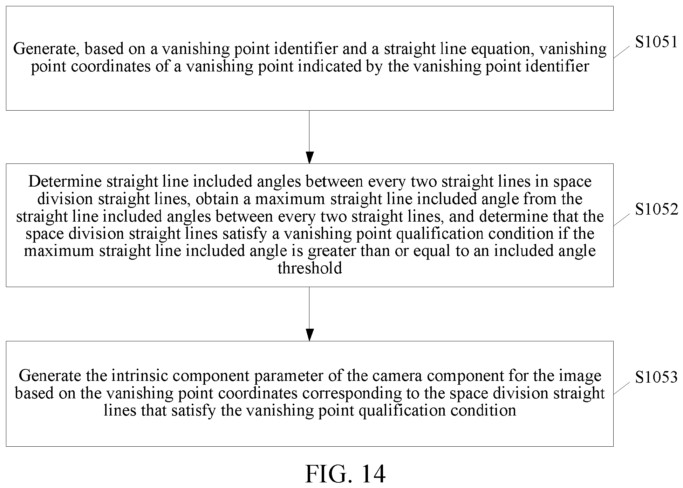

For a specific process of determining the intrinsic component parameter of the camera component for the image by the terminal device based on the vanishing point coordinates, reference may be made to the description of step S1052 to step S1053 in the embodiment corresponding to FIG. 14.

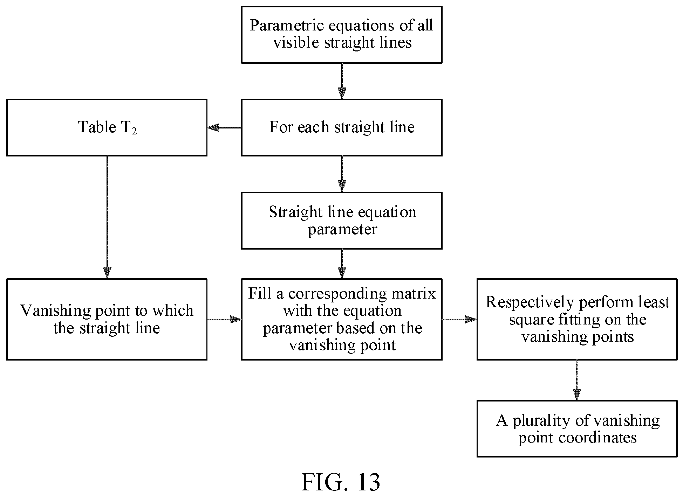

For ease of understanding, FIG. 13 is a schematic flowchart of determining vanishing point coordinates according to an embodiment of this application. As shown in FIG. 13, the terminal device may obtain parametric equations of all visible straight lines (that is, straight line equations of straight lines). For each visible straight line, straight line equation parameters (that is, straight line parameters) in the parametric equation are divided based on a vanishing point identifier (that is, a vanishing point to which each straight line belongs) mapped by each visible straight line recorded in a table T₂. To be specific, a corresponding matrix (that is, a space division matrix) is filled with the straight line equation parameters based on the vanishing point, and the space division matrix corresponding to each vanishing point is obtained.

Further, as shown in FIG. 13, the terminal device may respectively perform least square fitting on the vanishing points based on the space division matrix corresponding to each vanishing point, and obtain vanishing point coordinates of each vanishing point. A vanishing point corresponds to a coordinate axis, and the coordinate axis corresponds to a straight line equation of a group of straight lines (that are, space division straight lines).

It may be seen that in this embodiment of this application, the vanishing point identifiers mapped by the straight lines may be obtained from a second table, the straight line parameters corresponding to the straight lines are obtained from a straight line equation storage matrix, and the straight line parameters corresponding to the straight lines are divided based on the vanishing point identifiers, to obtain a space division matrix corresponding to the vanishing point identifier. Further, least square fitting is performed on the space division straight lines based on the space division matrix, so as to generate the vanishing point coordinates of the vanishing points corresponding to the space division straight lines, and then an intrinsic component parameter of a camera component is determined based on the vanishing point coordinates. The manner of determining the intrinsic component parameter based on the vanishing point coordinates provided in this embodiment of this application may reduce the costs of calibrating the intrinsic component parameter and increase a calibration speed.

Further, FIG. 14 is a schematic flowchart V of a data processing method according to an embodiment of this application. The data processing method may include the following step S1051 to step S1053. Step S1051 to step S1053 are specific embodiments of step S104 in the embodiment corresponding to FIG. 3.

Step S1051: Generate, based on a vanishing point identifier and a straight line equation, vanishing point coordinates of a vanishing point indicated by the vanishing point identifier.

For a specific process of generating the vanishing point coordinates by a terminal device based on the vanishing point identifier and the straight line equation, reference may be made to the description of step S1041 to step S1043 in the embodiment corresponding to FIG. 12.

Step S1052: Determine straight line included angles between every two straight lines in space division straight lines, obtain a maximum straight line included angle from the straight line included angles between every two straight lines, and determine that the space division straight lines satisfy a vanishing point qualification condition if the maximum straight line included angle is greater than or equal to an included angle threshold.

It may be understood that the terminal device may automatically detect, based on the detected vanishing point, whether the vanishing point is available. For each group of space division straight lines, if the group of space division straight lines include only two straight lines, the terminal device may directly calculate an included angle a (that is, the maximum straight line included angle) between the two straight lines. In all embodiments of the present disclosure, if the group of space division straight lines includes more than two straight lines, the terminal device may calculate the included angles between every two straight lines, and use the maximum one of the included angles between every two straight lines as the included angle a (that is, the maximum straight line included angle).

In all embodiments of the present disclosure, if the maximum straight line included angle is less than the included angle threshold, it is determined that the vanishing points corresponding to the group of space division straight lines are not available. To be specific, it is determined that the space division straight lines do not satisfy the vanishing point qualification condition. The vanishing point qualification condition is a condition that the maximum straight line included angle between every two straight lines in the space division straight lines is greater than or equal to the included angle threshold. In other words, if the straight lines in the space division straight lines are approximately parallel in the image, it may be determined that the group of space division straight lines are not available, and the vanishing point coordinates determined by using unavailable space division straight lines are inaccurate. It is to be understood that a specific value of the included angle threshold is not limited in this embodiment of this application.

Step S1053: Generate the intrinsic component parameter of the camera component for the image based on the vanishing point coordinates corresponding to the space division straight lines that satisfy the vanishing point qualification condition.

It is to be understood that the terminal device may generate the intrinsic component parameter of the camera component for the image when the space division straight lines that satisfy the vanishing point qualification condition are 2 groups or 3 groups. A group of space division straight lines correspond to a vanishing point, the straight lines in each group of space division straight lines are parallel to each other, and different groups of space division straight lines are perpendicular to each other.

When the space division straight lines satisfying the vanishing point qualification condition are less than or equal to 1 group, that is, when a quantity of available vanishing points is less than or equal to 1, the terminal device does not calibrate the intrinsic component parameter. When the space division straight lines satisfying the vanishing point qualification condition are equal to 2 groups, that is, when the quantity of available vanishing points is equal to 2, the terminal device may call a calibration algorithm of 2 vanishing points. When the space division straight lines satisfying the vanishing point qualification condition are equal to 3 groups, that is, when the quantity of available vanishing points is equal to 3, the terminal device may call the calibration algorithm of 3 vanishing points.

It is to be understood that when the space division straight lines satisfying the vanishing point qualification condition are equal to 2 groups (that is, when the quantity of vanishing points is 2), the vanishing point coordinates corresponding to the space division straight lines that satisfy the vanishing point qualification condition include first vanishing point coordinates and second vanishing point coordinates. It is to be understood that the terminal device may determine an optical center abscissa and an optical center ordinate of the camera component in the image based on an image height and an image width of the image. The optical center abscissa and the optical center ordinate are used to represent optical center coordinates of a component optical center of the camera component. Further, the terminal device may determine a first vector from the component optical center of the camera component to the first vanishing point coordinates and a second vector from the component optical center of the camera component to the second vanishing point coordinates. Further, the terminal device may determine a vertical relationship between the first vector and the second vector based on a vertical relationship between the space division straight line corresponding to the first vanishing point coordinates and the space division straight line corresponding to the second vanishing point coordinates, and establish, based on the vertical relationship between the first vector and the second vector, a constraint equation associated with the first vector and the second vector. Further, the terminal device may determine a component focal length of the camera component based on the first vanishing point coordinates, the second vanishing point coordinates, and the constraint equation. Further, the terminal device may use the optical center coordinates and the component focal length as the intrinsic component parameters of the camera component for the image.

The terminal device may obtain optical center coordinates (uₓ, u_{y}). A width (that is, the image width) of the image is w, and a height (that is, the image height) is h. Therefore, the optical center of the camera component is in the center of a picture formed by the image. To be specific, uₓ = w/2 (that is, the optical center abscissa), and u_{y} = h/2 (that is, the optical center ordinate).

The terminal device may calculate a focal length f of the camera component (that is, the component focal length). Based on a two-dimensional xy coordinate system of a plane of the camera which includes an optical center of the camera and is parallel to the focal plane of the camera, a right-handed rectangular coordinate system is established by using a direction along the focal point toward the optical center as a z-axis. In the right-handed rectangular coordinate system, coordinates of the focal point c_{f} are (uₓ, u_{y}, -f), coordinates of the optical center c are (uₓ, u_{y}, 0), coordinates p of the vanishing point 1 are (pₓ, p_{y}, -f) (that is, the first vanishing point coordinates), coordinates q of the vanishing point 2 are (qₓ, q_{y}, -f) (that is, the second vanishing point coordinates), and a distance between the focal point c_{f} and the optical center c is the focal length f. The vanishing point 1 and the vanishing point 2 may be vanishing points corresponding to any two coordinate axes in the x-axis, the y-axis, and the z-axis of the spatial coordinate axis corresponding to the image. To be specific, the first vanishing point coordinates and the second vanishing point coordinates are any two vanishing point coordinates among the vanishing point coordinates lₓ, the vanishing point coordinates l_{y}, and the vanishing point coordinates l_{z}. Lines connecting the optical center c to the vanishing point 1 and the vanishing point 2 coincide with coordinate axes in the right-handed rectangular coordinate system.

Because two groups of parallel lines in a three-dimensional space (that is, the space division straight line corresponding to the vanishing point 1 and the space division straight line corresponding to the vanishing point 2) are perpendicular to each other, a vector ν̅₁ from the optical center c to the vanishing point 1 (that is, the first vector, which is parallel to a group of parallel lines) is perpendicular to a vector *̅ν̅*̅₂ from the optical center c to the vanishing point 2 (that is, the second vector, which is parallel to another group of parallel lines), that is, ν̅₁ · *̅ν̅*̅₂ = 0 . For a constraint equation associated with the first vector and the second vector that is obtained by expansion, reference may be made to Formula (10): $\left({p}_{x}-{u}_{x}\right) \left({q}_{x}-{u}_{x}\right) + \left({p}_{y}-{u}_{y}\right) \left({q}_{y}-{u}_{y}\right) + {f}^{2} = 0$

According to the constraint equation shown in Formula (10), Formula (11) of the focal length f may be determined: $f = \sqrt{- \left({p}_{x}-{u}_{x}\right) \left({q}_{x}-{u}_{x}\right) - \left({p}_{y}-{u}_{y}\right) \left({q}_{y}-{u}_{y}\right)}$

In all embodiments of the present disclosure, it is to be understood that when 3 groups of space division straight lines satisfy the vanishing point qualification condition (that is, when the quantity of vanishing points is 3), the vanishing point coordinates corresponding to the space division straight lines that satisfy the vanishing point qualification condition include first vanishing point coordinates, second vanishing point coordinates, and third vanishing point coordinates. It is to be understood that the terminal device may determine a first vector from the component optical center of the camera component to the first vanishing point coordinates, a second vector from the component optical center of the camera component to the second vanishing point coordinates, and a third vector from the component optical center of the camera component to the third vanishing point coordinates. Further, the terminal device may determine a vertical relationship among the first vector, the second vector, and the third vector based on a vertical relationship among the space division straight line corresponding to the first vanishing point coordinates, the space division straight line corresponding to the second vanishing point coordinates, and the space division straight line corresponding to the third vanishing point coordinates, establish a constraint equation associated with the first vector and the second vector based on the vertical relationship between the first vector and the second vector, establish a constraint equation associated with the first vector and the third vector based on the vertical relationship between the first vector and the third vector, and establish a constraint equation associated with the second vector and the third vector based on the vertical relationship between the second vector and the third vector. Further, the terminal device may determine the component focal length of the camera component and the optical center abscissa and the optical center ordinate of the camera component in the image based on the first vanishing point coordinates, the second vanishing point coordinates, the third vanishing point coordinates, the constraint equation associated with the first vector and the second vector, the constraint equation associated with the first vector and the third vector, and the constraint equation associated with the second vector and the third vector. The optical center abscissa and the optical center ordinate are used to represent optical center coordinates of the component optical center of the camera component. Further, the terminal device may use the optical center coordinates and the component focal length as the intrinsic component parameters of the camera component for the image.

The 3 vanishing points indicate that 3 groups of parallel lines perpendicular to each other exist in an object. Therefore, a quantity of constraint equations formed by the vertical relationships is three. In this way, uₓ, u_{y}, and f may be solved by using the three constraint equations, without considering by default that uₓ = w/2 and u_{y} = h/2. Specifically, the processing process is as follows. Based on the two-dimensional xy coordinate system of a plane of the camera which includes an optical center of the camera and is parallel to the focal plane of the camera, the right-handed rectangular coordinate system is established by using the direction along the focal point toward the optical center as the z-axis. In the coordinate system, coordinates of the focal point c_{f} are (uₓ, u_{y}, -f), coordinates of the optical center c are (uₓ, u_{y}, 0), coordinates p of the vanishing point 1 are (pₓ, p_{y}, 0) (that is, the first vanishing point coordinates), coordinates q of the vanishing point 2 are (qₓ, q_{y}, 0) (that is, the second vanishing point coordinates), and coordinates r of the vanishing point 3 are (rₓ, r_{y}, 0) (that is, the third vanishing point coordinates). The vanishing point 1, the vanishing point 2, and the vanishing point 3 may be vanishing points respectively corresponding to the x-axis, the y-axis, and the z-axis of the spatial coordinate axis corresponding to the image. To be specific, the first vanishing point coordinates, the second vanishing point coordinates, and the third vanishing point coordinates are the vanishing point coordinates lₓ, the vanishing point coordinates l_{y}, and the vanishing point coordinates l_{z}. Lines connecting the optical center to the vanishing point 1, the vanishing point 2, and the vanishing point 3 coincide with the coordinate axes in the right-handed rectangular coordinate system.

Every two groups of parallel lines (that is, the space division straight line corresponding to the vanishing point 1 and the space division straight line corresponding to the vanishing point 2, the space division straight line corresponding to the vanishing point 1 and the space division straight line corresponding to the vanishing point 3, and the space division straight line corresponding to the vanishing point 2 and the space division straight line corresponding to the vanishing point 2) are perpendicular to each other in the three-dimensional space. Therefore, the vector ν̅₁ from the optical center c to the vanishing point 1 (the vector is parallel to a group of parallel lines) is perpendicular to the vector ν̅₂ from the optical center c to the vanishing point 2 (the vector is parallel to another group of parallel lines), the vector ν̅₁ from the optical center c to the vanishing point 1 is perpendicular to the vector ν̅₃ from the optical center c to the vanishing point 3, and the vector ν̅₂ from the optical center c to the vanishing point 2 is perpendicular to the vector ν̅₃ from the optical center c to the vanishing point 3. To be specific, ν̅₁ · ν̅₂ = 0, ν̅₁ · ν̅₃ = 0 , and ν̅₂ · ν̅₃ = 0. Based on the above, for the constraint equations obtained by expansion, reference may be made to Formula (12), Formula (13), and Formula (14): $\left({p}_{x}-{u}_{x}\right) \left({q}_{x}-{u}_{x}\right) + \left({p}_{y}-{u}_{y}\right) \left({q}_{y}-{u}_{y}\right) + {f}^{2} = 0$ $\left({p}_{x}-{u}_{x}\right) \left({r}_{x}-{u}_{x}\right) + \left({p}_{y}-{u}_{y}\right) \left({r}_{y}-{u}_{y}\right) + {f}^{2} = 0$ $\left({q}_{x}-{u}_{x}\right) \left({r}_{x}-{u}_{x}\right) + \left({q}_{y}-{u}_{y}\right) \left({r}_{y}-{u}_{y}\right) + {f}^{2} = 0$

According to the constraint equations shown in Formula (12), Formula (13), and Formula (14), Formula (15) may be obtained after simplification: $\left[\begin{matrix}{q}_{x} - {p}_{x} & {q}_{y} - {p}_{y} \\ {r}_{x} - {q}_{x} & {r}_{y} - {q}_{y}\end{matrix}\right] ⋅ \left[\begin{matrix}{u}_{x} \\ {u}_{y}\end{matrix}\right] = \left[\begin{matrix}{r}_{x} * \left({q}_{x}-{p}_{x}\right) + {r}_{y} * \left({q}_{y}-{p}_{y}\right) \\ {p}_{x} * \left({r}_{x}-{q}_{x}\right) + {p}_{y} * \left({r}_{y}-{q}_{y}\right)\end{matrix}\right]$

After matrix transformation is performed on Formula (15), Formula (16) of [*uₓ,u_{y}*]*^{T}* may be obtained: $\left[\begin{matrix}{u}_{x} \\ {u}_{y}\end{matrix}\right] = {\left[\begin{matrix}{q}_{x} - {p}_{x} & {q}_{y} - {p}_{y} \\ {r}_{x} - {q}_{x} & {r}_{y} - {q}_{y}\end{matrix}\right]}^{- 1} = \left[\begin{matrix}{r}_{x} * \left({q}_{x}-{p}_{x}\right) + {r}_{y} * \left({q}_{y}-{p}_{y}\right) \\ {p}_{x} * \left({r}_{x}-{q}_{x}\right) + {p}_{y} * \left({r}_{y}-{q}_{y}\right)\end{matrix}\right]$

After the terminal device obtains uₓ (that is, the optical center abscissa) and u_{y} (that is, the optical center ordinate), uₓ and u_{y} may be substituted into the foregoing Formula (12), and Formula (17) for calculating the focal length f may be obtained: $f = \sqrt{- \left({p}_{x}-{u}_{x}\right) \left({q}_{x}-{u}_{x}\right) - \left({p}_{y}-{u}_{y}\right) \left({q}_{y}-{u}_{y}\right)}$

In all embodiments of the present disclosure, after the terminal device obtains uₓ and u_{y}, uₓ and u_{y} may also be substituted into the foregoing Formula (13) or Formula (14), and the focal length f is calculated by using Formula (13) or Formula (14). For a specific process of calculating the focal length f by using Formula (13) or Formula (14), reference may be made to the description of calculating the focal length f by using Formula (12). Details are not described herein again.

It may be seen that in this embodiment of this application, the vanishing point coordinates of the vanishing point indicated by the vanishing point identifier may be generated based on the vanishing point identifier and the straight line equation, then the space division straight lines are screened based on the included angles between every two straight lines in the space division straight lines, so as to obtain the space division straight line that satisfies the vanishing point qualification condition, and then the intrinsic component parameter of the camera component is generated based on the vanishing point coordinates corresponding to the space division straight line that satisfies the vanishing point qualification condition. The manner of determining the intrinsic component parameter based on the vanishing point coordinates provided in this embodiment of this application may reduce the speed and costs of calibrating the intrinsic component parameter.

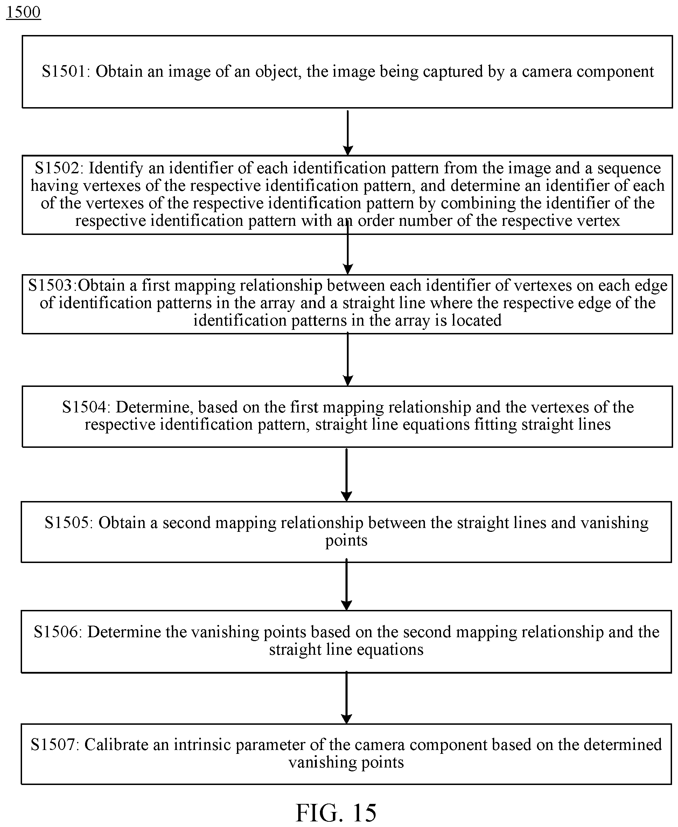

FIG. 15 shows a flowchart of a data processing method 1500 according to an embodiment of this application. The data processing method 1500 is performed by a computer device.

As shown in FIG. 15, the data processing method may include the following steps. Step S1501: Obtain an image of an object, the image being captured by a camera component, the image comprising one or more planar regions of the object, each of the one or more planar regions comprising an array of identification patterns, each of the identification patterns carrying information of an identifier. In all embodiments of the present disclosure, the object includes any one of the following: a planar region, two planar regions perpendicular to each other, and three planar regions perpendicular to each other. For example, the object includes at least one of a left wall 21a, a right wall 21b, and a ground region 21c, as shown in FIG. 2a. In all embodiments of the present disclosure, an identification pattern comprises a binary matrix which determines its identifier. The information of an identifier is represented by the binary matrix, which comprises white cells for presenting "0" bits and black cells for presenting "1" bits. An identifier can be identified from the binary matrix of an identification pattern. The identification pattern has a quadrilateral outline. The identification pattern is a two-dimensional code. For example, the identification pattern is an ArUco marker or QR code, and so on. The identification pattern 40b is an ArUco marker in FIG.4.

Step S1502: Identify an identifier of each identification pattern from the image and a sequence having vertexes of the respective identification pattern, the vertexes in the sequence being in a preset order, each of the vertexes of the respective identification pattern being on an edge of the respective identification pattern, and determine an identifier of each of the vertexes of the respective identification pattern by combining the identifier of the respective identification pattern with an order number of the respective vertex. For example, the preset order is clockwise starting from the top left vertex. For each identification pattern, its four vertexes are identified to obtain a sequence of four vertexes in the preset order. So, in the sequence, the first vertex is the top left vertex, followed by the top right vertex, bottom right vertex and bottom left vertex. Accordingly, each of order numbers of vertexes in the preset order indicates a position of the respective vertex in the respective identification pattern. In other words, the order numbers of the vertexes indicate an arrangement of the vertexes in the respective identification pattern. In step S1502, an identification pattern detection algorithm may be used to detect an identification pattern in the image and its vertexes. Each edge of a quadrilateral outline (or a bounding quadrilateral) of the identification pattern may be considered as an edge of the identification pattern. The identification pattern detection algorithm may be any open source algorithm, for example, an ArUco detection algorithm in opencv (a cross-platform computer vision and machine learning software library released based on the Apache 2.0 license (open source)). For instance, the identifier of an identification pattern is "012", the order numbers of the vertexes are "0", "1", "2", "3", which indicate top left position, top right position, bottom right position and bottom left position, respectively. For a vertex with the order number of "0", its identifier is determined as "0120", by combining the identifier of "012" with the order number of "0". Accordingly, for a vertex with the order number of "1", its identifier is determined as "0121", by combining the identifier of "012" with the order number of "1".

Step S1503: Obtain a first mapping relationship between each identifier of vertexes on each edge of identification patterns in the array and a straight line where the respective edge of the identification patterns in the array is located. In all embodiments of the present disclosure, each edge of the identification patterns in the array may be parallel to one coordinate axis in a first three-dimensional rectangular coordinate system. For example, the first three-dimensional rectangular coordinate system may be the coordinate system (x, y, z), as shown in FIG.2a.

Step S1504: Determine, based on the first mapping relationship and the vertexes of the respective identification pattern, straight line equations fitting straight lines.

Step S1505: Obtain a second mapping relationship between the straight lines and vanishing points. Each of the vanishing points represents a visual intersection point of image projection of parallel lines in the real world. A group of straight lines parallel to each other in the straight lines where the edges of the identification patterns in the array are located corresponds to the same vanishing point.

Step S1506: Determine the vanishing points based on the second mapping relationship and the straight line equations. For example, FIG.9 shows vanishing points 91a, 91b and 91c.

Step S1507: Calibrate an intrinsic parameter of the camera component based on the determined vanishing points. The quantity of the determined vanishing point herein is, for example, 2 or 3.

Based on the above, according to the solution of the embodiments of this application, the calibration of the intrinsic camera parameter may be implemented by using the single image captured by the object including identification patterns. In particular, since the identification pattern is identifiable, according to the solutions of the embodiments of this application, the identification patterns at a plurality of angles to the camera (for example, identification patterns corresponding to two planar regions perpendicular to each other or three planar regions perpendicular to each other) may be obtained from the single image, and arrangement information of the identification pattern (e.g., identifier and vertexes) is used to determine straight line equations fitting straight lines, so that each straight line where each edge in the image is located can be determined. Further, the determined straight lines may be used to determine the vanishing points, so that the vanishing points may be used to calibrate the content of the camera. In this way, according to the solutions of the embodiments of this application, the trouble that a plurality of checkerboard images need to be captured from a plurality of angles to calibrate the intrinsic camera parameter in an calibration scheme (for example, a manner of calibration by using a checkerboard) may be avoided, thereby simplifying image capture and improving efficiency and convenience of calibration of the intrinsic camera parameter.

In addition, in embodiments of the application, since the identification pattern is identifiable, the first mapping relationship and the second mapping relationship may be established before the method 1500 is performed. On this basis, in all embodiments of the present disclosure,, the first mapping relationship and the second mapping relationship do not need to be created by using the image during performing of the method 1500, and the first mapping relationship and the second mapping relationship may be predetermined, thereby further improving data processing efficiency of the computer device during calibration of the intrinsic camera parameter.

In all embodiments of the present disclosure, the identification pattern in the array is a two-dimensional code. In step S1502, each identification pattern in the image may be detected to identify the identifier of the identification pattern and the sequence having the vertexes with coordinates in an image plane of the image. The image plane is the plane upon which the lens projects the image. Each edge of the respective identification pattern is an edge of a bounding quadrilateral of the respective identification pattern.

In all embodiments of the present disclosure, in step S1503, the first table for representing the first mapping relationship may be obtained. The first table is used for indicating a correspondence between each identifier of vertexes on each edge of identification patterns in the array and a straight line where the respective edge of the identification patterns in the array is located.

In all embodiments of the present disclosure,, the first table is created before the image is obtained, and a manner of creating the first table includes:
associating, in the first table, each identifier of vertexes on each edge of identification patterns in the array with an identifier of a straight line where the respective edge of the identification patterns in the array is located, based on an arrangement of the identification patterns in the array. In other words associating, based on an arrangement of the identification patterns in the array, each identifier of vertexes on each edge of identification patterns in the array and an identifier of a straight line are associated and stored in the first table, based on an arrangement of the identification patterns in the array. Herein, the first mapping relationship is obtained from the pre-established first table, so that the efficiency of data processing during the calibration of the intrinsic camera parameter may be improved in embodiments of this application.

In all embodiments of the present disclosure, the obtaining a second mapping relationship between the straight lines and vanishing points includes:
obtaining a second table representing the second mapping relationship, the second table indicating a correspondence between identifiers of the straight lines where edges of the identification patterns in the array are located and identifiers of the vanishing points. Herein, the second mapping relationship is obtained from the pre-established second table, so that the efficiency of data processing during the calibration of the intrinsic camera parameter may be improved in embodiments of this application.

In all embodiments of the present disclosure, the second table corresponds to two vanishing points or three vanishing points. In other words, the second table indicates the mapping relationship between identifiers of the straight lines and two vanishing points or three vanishing points.

In a case that the second table corresponds to two vanishing points, the two vanishing points include a first vanishing point and a second vanishing point. Straight lines corresponding to the first vanishing point are parallel to a first coordinate axis in a first three-dimensional rectangular coordinate system, and straight lines corresponding to the second vanishing point are parallel to a second coordinate axis in the first three-dimensional rectangular coordinate system.

In a case that the second table corresponds to three vanishing points, the three vanishing points include a first vanishing point, a second vanishing point, and a third vanishing point. The straight line corresponding to the first vanishing point is parallel to the first coordinate axis in the first three-dimensional rectangular coordinate system, the straight line corresponding to the second vanishing point is parallel to the second coordinate axis in the first three-dimensional rectangular coordinate system, and a straight line corresponding to the third vanishing point is parallel to a third coordinate axis in the first three-dimensional rectangular coordinate system. The first three-dimensional rectangular coordinate system may be the coordinate system with a x-axis, a y-axis, and a z-axis, as shown in FIG.2a.

In all embodiments of the present disclosure, the second table is created before the image is obtained, and a manner of creating the second table includes:
dividing, based on an arrangement of the identification patterns in the array, straight lines where edges of the identification patterns in the array are located, into at least two groups, straight lines in each group being parallel to each other, and the straight lines in different groups being perpendicular to each other;
associating an identifier of each vanishing point with the straight lines in the respective group the straight lines in a single group corresponding to the identifier of the same vanishing point; and
creating, based on the identifier of the respective vanishing point associated with the straight lines in the respective group, the second table representing the second mapping relationship.

In all embodiments of the present disclosure, S1504 may be implemented as the following steps:
S1: Query, from the first mapping relationship, straight lines for each vertex of the respective identification pattern. For example, in S1, the identifier of the straight line corresponding to each vertex of the respective identification pattern may be found.
S2: Associate the respective vertex of the respective identification pattern with the queried straight lines. In other words, in S2, each vertex of the respective identification pattern, may be assigned to the straight lines where the respective edge is located.
S3: Determine, for each of the queried straight lines, a straight line equation by the vertexes associated with the respective straight line. In other words, for each straight line, in S3, the vertex on the straight line may be used to determine the straight line equation of the straight line. For example, least squares line fitting is used to determine a straight line equation from the vertexes on the respective straight line. The more specific implementation of the least squares line fitting is similar to step S1032.

Based on the above, in S1504, the first mapping relationship may be used to assign the vertexes to the respective straight line. A vertex assigned to a straight line is the vertex on the straight line, so that a plurality of vertexes on the straight line may be used to determine the straight line equation.

In all embodiments of the present disclosure, S1506 may be implemented by: determining, for each straight line equation, an identifier of a vanishing point corresponding to a respective straight line from the second mapping relationship; and determining coordinates of the vanishing point in an image plane of the image from straight line equations of straight lines corresponding to the determined identifier of the vanishing point. Herein, in S1506, an intersection point of the straight lines represented by a plurality of straight line equations in the image may be used as the vanishing point. Any known algorithm for fitting the intersection point of a set of straight lines can be used in all embodiments of the present disclosure. For example, in S1506, the intersection point of a set of straight lines is determined by least square method. The more specific implementation of the least square method is similar to step S1043 above. For another example, in S1506, for every two straight lines in a group of straight lines corresponding to a vanishing point, firstly determine an intersection point of the two straight lines, and then determine coordinates of the vanishing point in an image plane of the image by averaging coordinates of all the intersection points.

In all embodiments of the present disclosure, before the determining coordinates of the vanishing point in an image plane of the image from straight line equations of straight lines corresponding to the determined identifier of the vanishing point, the method 1500 further includes: determining, for the determined identifier of each vanishing point, a maximum included angle between the straight lines represented by the straight line equations corresponding to the determined identifier of the respective vanishing point; and removing the determined identifier of the respective vanishing point, in a case that the maximum included angle is less than a first threshold. In other words, an identifier of a vanishing point is removed from the determined identifiers of the vanishing points corresponding to the straight line equations in a case that the maximum included angle corresponding to the identifier of the vanishing point is less than a first threshold. Herein, the first threshold may be set as required, for example, 5 degrees, but is not limited thereto. In this way, the identifier of the vanishing point is deleted for selection of the vanishing point, to avoid using the unqualified vanishing point (that is, the vanishing point corresponding to a case where the maximum included angle is less than the first threshold) to calibrate the intrinsic camera parameter, thereby improving accuracy of the calibration of the intrinsic parameter.

In all embodiments of the present disclosure, before the determining coordinates of the vanishing point in an image plane of the image from straight line equations of straight lines corresponding to the determined identifier of the vanishing point, the method 1500 may further include:
determining, for the determined identifier of each vanishing point, whether a quantity of straight line equations corresponding to the identifier of the respective vanishing point reaches a second threshold; and
removing the determined identifier of the respective vanishing point, in a case that the quantity of the straight line equations corresponding to the identifier of the respective vanishing point is less than the second threshold.

The second threshold herein is, for example, 2. When the quantity of straight line equations corresponding to one identifier does not reach the second threshold, the coordinates of the corresponding vanishing point cannot be calculated actually. Therefore, the identifier of the vanishing point is removed from the determined identifiers of the vanishing points in this application, to avoid invalid calculation, thereby improving data processing efficiency.

In all embodiments of the present disclosure, S1507 may be implemented as the following steps:
S11: Determine coordinates of an optical center of the camera component based on a height and a width of the image. For example, assuming that coordinates of the optical center are (uₓ, u_{y}), the width and the height of the image are denoted as w and h, and optical center coordinates of the camera are: uₓ = w/2, and u_{y} = h/2.
S12: Determine a vector of each vanishing point, the vector of the respective vanishing point being between the respective vanishing point and the optical center of the camera component, the vectors of different vanishing points being perpendicular to each other.
S13: Determine a focal length of the camera component based on the vector of each vanishing point.

For example, based on a two-dimensional xy coordinate system of a plane of the camera which includes an optical center of the camera and is parallel to the focal plane of the camera, a right-handed rectangular coordinate system (i.e., camera coordinate system) is established by using a direction along a camera focus toward the optical center as a z-axis. The right-handed rectangular coordinate system is also referred to be as a second three-dimensional rectangular coordinate system.

In the second three-dimensional rectangular coordinate system, coordinates of the camera focus c_{f} are denoted as (uₓ, u_{y}, -f), and coordinates of an optical center c are denoted as (uₓ, u_{y}, 0). A total of two vanishing points exist in S13, where coordinates p of a vanishing point 1 are (pₓ, p_{y}, -f), and coordinates q of a vanishing point 2 are (qₓ, q_{y}, -f). Wherein, (pₓ, p_{y}) are equal to the coordinates of the vanishing point 1 in the image plane of the image. Similarly, (qₓ, q_{y}) are equal to the coordinates of the vanishing point 2 in the image plane of the image.

Since two groups of parallel lines in a 3D space are perpendicular to each other, a vector v̅₁̅ (the vector is parallel to a group of straight lines) from the optical center c of the camera to the vanishing point 1 is perpendicular to a vector v̅₂̅ (the vector is parallel to another group of straight lines) from the optical center c to the vanishing point 2, that is, v̅₁̅ · v̅₂̅ = 0. A constraint equation is obtained by expansion: $\left({p}_{x}-{u}_{x}\right) \left({q}_{x}-{u}_{x}\right) + \left({p}_{y}-{u}_{y}\right) \left({q}_{y}-{u}_{y}\right) + {f}^{2} = 0$ Based on the foregoing equation, a value of a focal length f may be calculated: $f = \sqrt{- \left({p}_{x}-{u}_{x}\right) \left({q}_{x}-{u}_{x}\right) - \left({p}_{y}-{u}_{y}\right) \left({q}_{y}-{u}_{y}\right)}$

In all embodiments of the present disclosure, a total of three vanishing points exist in S13. The coordinates p of the vanishing point 1 are (pₓ, p_{y}, 0), the coordinates q of the vanishing point 2 are (qₓ, q_{y}, 0), and the coordinates r of a vanishing point 3 are (rₓ, r_{y}, 0). The 3 vanishing points indicate that 3 groups of straight lines are perpendicular to each other in the object. Therefore, a quantity of constraint equations formed by the vertical relationships is three. In this way, uₓ, u_{y}, and f may be solved by using the three constraint equations, without considering by default that uₓ = w/2, and u_{y} = h/2. Specifically, based on the two-dimensional xy coordinate system of a plane of the camera which includes an optical center of the camera and is parallel to the focal plane of the camera, the right-handed rectangular coordinate system (i.e., the second three-dimensional rectangular coordinate system) is established by using the direction along the focal point toward the optical center as the z-axis. In the second three-dimensional rectangular coordinate system, coordinates of the focal point c_{f} are (uₓ, u_{y}, -f), coordinates of the optical center c are (uₓ, u_{y}, 0), coordinates p of the vanishing point 1 are (pₓ, p_{y}, 0) (that is, the first vanishing point coordinates), coordinates q of the vanishing point 2 are (qₓ, q_{y}, 0) (that is, the second vanishing point coordinates), and coordinates r of the vanishing point 3 are (rₓ, r_{y}, 0) (that is, the third vanishing point coordinates). The vanishing point 1, the vanishing point 2, and the vanishing point 3 may be vanishing points respectively corresponding to the x-axis, the y-axis, and the z-axis of the first three-dimensional rectangular coordinate system. To be specific, the first vanishing point coordinates, the second vanishing point coordinates, and the third vanishing point coordinates are the vanishing point coordinates lₓ, the vanishing point coordinates l_{y}, and the vanishing point coordinates l_{z}. Lines connecting the optical center to the vanishing point 1, the vanishing point 2, and the vanishing point 3 coincide with the coordinate axes in second three-dimensional rectangular coordinate system.

Every two groups of straight lines (that is, straight lines corresponding to the vanishing point 1 and the straight lines corresponding to the vanishing point 2, or the straight lines corresponding to the vanishing point 1 and straight lines corresponding to the vanishing point 3, or the straight lines corresponding to the vanishing point 2 and the straight lines corresponding to the vanishing point 3) are perpendicular to each other in the three-dimensional space. Therefore, the vector ν̅₁ from the optical center c to the vanishing point 1 (the vector is parallel to a group of straight lines) is perpendicular to the vector ν̅₂ from the optical center c to the vanishing point 2 (the vector is parallel to another group of straight lines), the vector ν̅₁ from the optical center c to the vanishing point 1 is perpendicular to the vector ν̅₃ from the optical center c to the vanishing point 3, and the vector ν̅₂ from the optical center c to the vanishing point 2 is perpendicular to the vector ν̅₃ from the optical center c to the vanishing point 3. To be specific, ν̅₁ · ν̅₂ = 0, ν̅₁ · ν̅₃ = 0 , and ν̅₂ · ν̅₃ = 0. Based on the above, for the constraint equations obtained by expansion, reference may be made to Formula (12), Formula (13), and Formula (14): $\left({p}_{x}-{u}_{x}\right) \left({q}_{x}-{u}_{x}\right) + \left({p}_{y}-{u}_{y}\right) \left({q}_{y}-{u}_{y}\right) + {f}^{2} = 0$ $\left({p}_{x}-{u}_{x}\right) \left({r}_{x}-{u}_{x}\right) + \left({p}_{y}-{u}_{y}\right) \left({r}_{y}-{u}_{y}\right) + {f}^{2} = 0$ $\left({q}_{x}-{u}_{x}\right) \left({r}_{x}-{u}_{x}\right) + \left({q}_{y}-{u}_{y}\right) \left({r}_{y}-{u}_{y}\right) + {f}^{2} = 0$

According to the constraint equations shown in Formula (12), Formula (13), and Formula (14), Formula (15) may be obtained after simplification: $\left[\begin{matrix}{q}_{x} - {p}_{x} & {q}_{y} - {p}_{y} \\ {r}_{x} - {q}_{x} & {r}_{y} - {q}_{y}\end{matrix}\right] ⋅ \left[\begin{matrix}{u}_{x} \\ {u}_{y}\end{matrix}\right] = \left[\begin{matrix}{r}_{x} ∗ \left({q}_{x}-{p}_{x}\right) + {r}_{y} ∗ \left({q}_{y}-{p}_{y}\right) \\ {p}_{x} ∗ \left({r}_{x}-{q}_{x}\right) + {p}_{y} ∗ \left({r}_{y}-{q}_{y}\right)\end{matrix}\right]$

After matrix transformation is performed on Formula (15), Formula (16) of [*uₓ,u_{y}*]*^{T}* may be obtained: $\left[\begin{matrix}{u}_{x} \\ {u}_{y}\end{matrix}\right] = {\left[\begin{matrix}{q}_{x} - {p}_{x} & {q}_{y} - {p}_{y} \\ {r}_{x} - {q}_{x} & {r}_{y} - {q}_{y}\end{matrix}\right]}^{- 1} ⋅ \left[\begin{matrix}{r}_{x} ∗ \left({q}_{x}-{p}_{x}\right) + {r}_{y} ∗ \left({q}_{y}-{p}_{y}\right) \\ {p}_{x} ∗ \left({r}_{x}-{q}_{x}\right) + {p}_{y} ∗ \left({r}_{y}-{q}_{y}\right)\end{matrix}\right]$

After the terminal device obtains uₓ (that is, the optical center abscissa) and u_{y} (that is, the optical center ordinate), uₓ and u_{y} may be substituted into the foregoing Formula (12), and then, Formula (17) for calculating the focal length f may be obtained: $f = \sqrt{- \left({p}_{x}-{u}_{x}\right) \left({q}_{x}-{u}_{x}\right) - \left({p}_{y}-{u}_{y}\right) \left({q}_{y}-{u}_{y}\right)}$

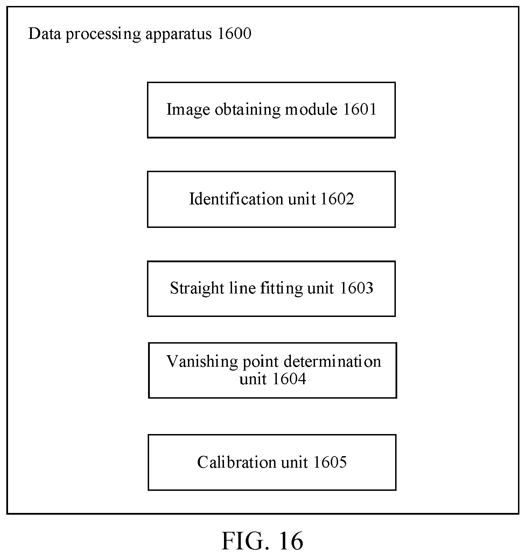

Further, FIG. 16 is a schematic structural diagram of a data processing apparatus 1600 according to an embodiment of this application. The data processing apparatus 1600 may include:
an image obtaining module 1601, configured to obtain an image of an object, the image being captured by a camera component, the image comprising one or more planar regions of the object, each of the one or more planar regions comprising an array of identification patterns, each of the identification patterns carrying information of an identifier;
an identification unit 1602, configured to identify an identifier of each identification pattern from the image and a sequence having vertexes of the respective identification pattern, the vertexes in the sequence being in a preset order, each of the vertexes of the respective identification pattern being on an edge of the respective identification pattern; and determine an identifier of each of the vertexes of the respective identification pattern by combining the identifier of the respective identification pattern with an order number of the respective vertex;
a straight line fitting unit 1603, configured to: obtain a first mapping relationship between each identifier of vertexes on each edge of identification patterns in the array and a straight line where the respective edge of the identification patterns in the array is located; and determine, based on the first mapping relationship and the vertexes of the respective identification pattern, straight line equations fitting straight lines;
a vanishing point determination unit 1604, configured to: obtain a second mapping relationship between the straight lines and vanishing points; determine the vanishing points based on the second mapping relationship and the straight line equations; and
a calibration unit 1605, configured to calibrate an intrinsic parameter of the camera component based on the determined vanishing points.

Based on the above, according to the solution of the embodiments of this application, the calibration of the intrinsic camera parameter may be implemented by using the single image captured by the object including identification patterns. In particular, since the identification pattern is identifiable, according to the solutions of the embodiments of this application, the identification patterns at a plurality of angles to the camera (for example, identification patterns corresponding to two planar regions perpendicular to each other or three planar regions perpendicular to each other) may be obtained from the single image, and arrangement information of the identification pattern (e.g., identifier and vertexes) is used to determine straight line equations fitting straight lines, so that each straight line where each edge in the image is located can be determined. Further, the determined straight lines may be used to determine the vanishing points, so that the vanishing points may be used to calibrate the content of the camera. In this way, according to the solutions of the embodiments of this application, the trouble that a plurality of checkerboard images need to be captured from a plurality of angles to calibrate the intrinsic camera parameter in an calibration scheme (for example, a manner of calibration by using a checkerboard) may be avoided, thereby simplifying image capture and improving efficiency and convenience of calibration of the intrinsic camera parameter.

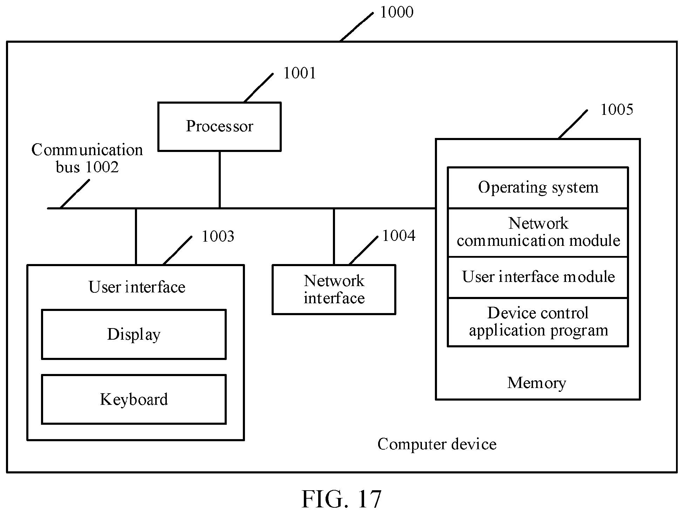

Further, FIG. 17 is a schematic structural diagram of a computer device according to an embodiment of this application. A computer device 1000 shown in FIG. 17 may be the server or the terminal device in the foregoing embodiments. The computer device 1000 may include a processor 1001, a network interface 1004, and a memory 1005. In addition, the foregoing computer device 1000 may further include a user interface 1003 and at least one communication bus 1002. The communication bus 1002 is configured to implement connection and communication between these components. In all embodiments of the present disclosure, the user interface 1003 may include a display and a keyboard. In all embodiments of the present disclosure, the user interface 1003 may further include a standard wired interface and a wireless interface. In all embodiments of the present disclosure, the network interface 1004 may include a standard wired interface and a wireless interface (such as a Wi-Fi interface). The memory 1005 may be a high-speed RAM memory, or may be a non-volatile memory, for example, at least one magnetic disk memory. In all embodiments of the present disclosure, the memory 1005 may alternatively be at least one storage apparatus located away from the foregoing processor 1001. As shown in FIG. 17, as a computer-readable storage medium, the memory 1005 may include an operating system, a network communication module, a user interface module, and a device control application program.

In the computer device 1000 shown in FIG. 17, the network interface 1004 may provide a network communication function, the user interface 1003 is mainly configured to provide an input interface for a user, and the processor 1001 may be configured to invoke a device control application program stored in the memory 1005, to implement the data processing method according to the embodiments of this application.

It is to be understood that the computer device 1000 described in this embodiment of this application may perform the description of the data processing method in the embodiments corresponding to FIG. 3, FIG. 7, FIG. 10, FIG. 12, and FIG. 14, and may also perform the description of the data processing apparatus 1 in the foregoing embodiment corresponding to FIG. 15, and details are not described herein again. In addition, for the description of the beneficial effects of using the same method, details are not described again.

Moreover, an embodiment of this application further provides a computer-readable storage medium, the computer-readable storage medium having the computer program executed by the data processing apparatus 1 mentioned above. When the processor executes the computer program, the description of the data processing method in the foregoing embodiments corresponding to FIG. 3, FIG. 7, FIG. 10, FIG. 12, FIG. 14, and FIG. 15 can be performed. Therefore, details are not described herein again. In addition, for the description of the beneficial effects of using the same method, details are not described again. For technical details that are not disclosed in the embodiment of the computer-readable storage medium involved in this application, reference is made to the description of the method embodiment of this application.

In addition, an embodiment of this application further provides a computer program product. The computer program product may include a computer program, and the computer program may be stored in a computer-readable storage medium. A processor of a computer device reads the computer program from the computer-readable storage medium, and the processor may execute the computer program, so that the computer device performs the description of the data processing method in the foregoing embodiments corresponding to FIG. 3, FIG. 7, FIG. 10, FIG. 12, FIG. 14, and FIG. 15. Therefore, details are not described herein again. In addition, for the description of the beneficial effects of using the same method, details are not described again. For technical details that are not disclosed in the embodiment of the computer program product involved in this application, reference is made to the description of the method embodiment of this application.

A person of ordinary skill in the art may understand that all or some of the processes of the method in the foregoing embodiments may be implemented by using a computer program instructing relevant hardware. The computer program may be stored in a computer-readable storage medium. When the program is executed, the processes of the foregoing method embodiments may be performed. The storage medium may be a magnetic disk, an optical disk, a read-only memory (ROM), a random access memory (RAM), or the like.

## Claims

1. A data processing method, executable by a computer device, the method comprising:
obtaining (S1501) an image of an object, the image being captured by a camera component, the image comprising one or more planar regions of the object, each of the one or more planar regions comprising an array of identification patterns, each of the identification patterns carrying information of an identifier;
identifying (S1502) an identifier of each identification pattern from the image and a sequence having vertexes of the respective identification pattern, the vertexes in the sequence being in a preset order, each of the vertexes of the respective identification pattern being on an edge of the respective identification pattern;
determining (S1502) an identifier of each of the vertexes of the respective identification pattern by combining the identifier of the respective identification pattern with an order number of the respective vertex;
obtaining (S1503) a first mapping relationship between each identifier of vertexes on each edge of identification patterns in the array and a straight line where the respective edge of the identification patterns in the array is located;
determining (S1504), based on the first mapping relationship and the vertexes of the respective identification pattern, straight line equations fitting straight lines;
obtaining (S1505) a second mapping relationship between the straight lines and vanishing points;
determining (S1506) the vanishing points based on the second mapping relationship and the straight line equations; and
calibrating (S1507) an intrinsic parameter of the camera component based on the determined vanishing points.

2. The method according to claim 1, wherein each identification pattern in the array is a two-dimensional code; and the identifying (S1502) an identifier of each identification pattern from the image and a sequence having vertexes of the respective identification pattern comprises:
detecting each identification pattern from the image to determine the identifier of the respective identification pattern and the sequence having the vertexes with coordinates in an image plane of the image, each edge of the respective identification pattern being an edge of a bounding quadrilateral of the respective identification pattern.

3. The method according to claim 1 or 2, wherein the obtaining (S1503) a first mapping relationship between each identifier of vertexes on each edge of identification patterns in the array and a straight line where the respective edge of the identification patterns in the array is located comprises:
obtaining a first table representing the first mapping relationship, the first table indicating a correspondence between each identifier of vertexes on each edge of identification patterns in the array and a straight line where the respective edge of the identification patterns in the array is located.

4. The method according to claim 3, wherein the first table is created before the image is obtained, and creating the first table comprises:
associating, in the first table, each identifier of vertexes on each edge of identification patterns in the array with an identifier of a straight line where the respective edge of the identification patterns in the array is located, based on an arrangement of the identification patterns in the array.

5. The method according to any one of claims 1 to 4, wherein the obtaining (S1505) a second mapping relationship between the straight lines and vanishing points comprises:
obtaining a second table representing the second mapping relationship, the second table indicating a correspondence between identifiers of the straight lines where edges of the identification patterns in the array are located and identifiers of the vanishing points.

6. The method according to claim 5, wherein the second table corresponds to two vanishing points or three vanishing points,
in a case that the second table corresponds to two vanishing points, the two vanishing points comprising a first vanishing point and a second vanishing point, straight lines corresponding to the first vanishing point being parallel to a first coordinate axis in a first three-dimensional rectangular coordinate system, and straight lines corresponding to the second vanishing point being parallel to a second coordinate axis in the first three-dimensional rectangular coordinate system; or
in a case that the second table corresponds to three vanishing points, the three vanishing points comprising the first vanishing point, the second vanishing point, and a third vanishing point, the straight lines corresponding to the first vanishing point being parallel to the first coordinate axis in the first three-dimensional rectangular coordinate system, the straight lines corresponding to the second vanishing point being parallel to the second coordinate axis in the first three-dimensional rectangular coordinate system, straight lines corresponding to the third vanishing point being parallel to a third coordinate axis in the first three-dimensional rectangular coordinate system.

7. The method according to claim 5, wherein the second table is created before the image is obtained, and creating the second table comprises:
dividing, based on an arrangement of the identification patterns in the array, straight lines where edges of the identification patterns in the array are located, into at least two groups, straight lines in each group being parallel to each other, and the straight lines in different groups being perpendicular to each other;
associating an identifier of each vanishing point with the straight lines in the respective group; and
creating, based on the identifier of the respective vanishing point associated with the straight lines in the respective group, the second table representing the second mapping relationship.

8. The method according to any one of claims 1 to 7, wherein the determining (S1504), based on the first mapping relationship and the vertexes of the respective identification pattern, straight line equations fitting straight lines comprises:
querying, from the first mapping relationship, straight lines for each vertex of the respective identification pattern;
associating the respective vertex of the respective identification pattern with the queried straight lines; and
determining, for each of the queried straight lines, a straight line equation by the vertexes associated with the respective straight line.

9. The method according to any one of claims 1 to 8, wherein the determining (S1506) the vanishing points based on the second mapping relationship and the straight line equations comprises:
determining, for each straight line equation, an identifier of a vanishing point corresponding to a respective straight line from the second mapping relationship; and
determining coordinates of the vanishing point in an image plane of the image from straight line equations of straight lines corresponding to the determined identifier of the vanishing point.

10. The method according to claim 9, before the determining coordinates of the vanishing point in an image plane of the image from straight line equations of straight lines corresponding to the determined identifier of the vanishing point, the method further comprising:
determining, for the determined identifier of each vanishing point, a maximum included angle between the straight lines represented by the straight line equations corresponding to the determined identifier of the respective vanishing point; and
removing the determined identifier of the respective vanishing point, in a case that the maximum included angle is less than a first threshold.

11. The method according to claim 9, before the determining coordinates of the vanishing point in an image plane of the image from straight line equations of straight lines corresponding to the determined identifier of the vanishing point, the method further comprising:
determining, for the determined identifier of each vanishing point, whether a quantity of straight line equations corresponding to the identifier of the respective vanishing point reaches a second threshold; and
removing the determined identifier of the respective vanishing point, in a case that the quantity of the straight line equations corresponding to the identifier of the respective vanishing point is less than the second threshold.

12. The method according to any one of claims 1 to 11, wherein the calibrating (S1507) an intrinsic parameter of the camera component based on the determined vanishing points comprises:
determining coordinates of an optical center of the camera component based on a height of the image and a width of the image;
determining a vector of each vanishing point, the vector of the respective vanishing point being between the respective vanishing point and the optical center of the camera component, the vectors of different vanishing points being perpendicular to each other; and
determining a focal length of the camera component based on the vector of each vanishing point.

13. A computer device, comprising: a processor and a memory,
the processor being connected to the memory, the memory being configured to store a computer program, the processor being configured to invoke the computer program, to cause the computer device to perform the method according to any one of claims 1 to 12.

14. A computer-readable storage medium, the computer-readable storage medium having a computer program stored therein, the computer program being adapted to be loaded and executed by a processor, to cause a computer device having the processor to perform the method according to any one of claims 1 to 12.

15. A computer program product, having one or more instructions stored therein, the one or more instructions being adapted to be loaded and executed by a processor, to cause the processor to perform the method according to any one of claims 1 to 12.

## Patentansprüche

1. Ein Datenverarbeitungsverfahren, ausführbar durch eine Computervorrichtung, wobei das Verfahren umfasst:
Erhalten (S1501) eines Bildes eines Objekts, wobei das Bild durch eine Kamerakomponente aufgenommen wird, wobei das Bild einen oder mehrere planare Bereiche des Objekts umfasst, wobei jeder des einen oder der mehreren planaren Bereiche eine Anordnung von Identifikationsmustern umfasst, wobei jedes der Identifikationsmuster Informationen einer Kennung trägt;
Identifizieren (S1502) einer Kennung jedes Identifikationsmusters aus dem Bild und einer Sequenz, die Scheitelpunkte des jeweiligen Identifikationsmusters aufweist, wobei die Scheitelpunkte in der Sequenz in einer voreingestellten Reihenfolge vorliegen, wobei jeder der Scheitelpunkte des jeweiligen Identifikationsmusters auf einer Kante des jeweiligen Identifikationsmusters liegt;
Bestimmen (S1502) einer Kennung jedes der Scheitelpunkte des jeweiligen Identifikationsmusters durch Kombinieren der Kennung des jeweiligen Identifikationsmusters mit einer Ordnungsnummer des jeweiligen Scheitelpunkts;
Erhalten (S1503) einer ersten Abbildungsbeziehung zwischen jeder Kennung von Scheitelpunkten auf jeder Kante von Identifikationsmustern in der Anordnung und einer Geraden, auf der die jeweilige Kante der Identifikationsmuster in der Anordnung angeordnet ist;
Bestimmen (S1504), basierend auf der ersten Abbildungsbeziehung und den Scheitelpunkten des jeweiligen Identifikationsmusters, von Geradengleichungen, die Geraden anpassen;
Erhalten (S1505) einer zweiten Abbildungsbeziehung zwischen den Geraden und Fluchtpunkten;
Bestimmen (S1506) der Fluchtpunkte basierend auf der zweiten Abbildungsbeziehung und den Geradengleichungen; und
Kalibrieren (S1507) eines intrinsischen Parameters der Kamerakomponente basierend auf den bestimmten Fluchtpunkten.

2. Verfahren nach Anspruch 1, wobei jedes Identifikationsmuster in der Anordnung ein zweidimensionaler Code ist; und wobei das Identifizieren (S1502) einer Kennung jedes Identifikationsmusters aus dem Bild und einer Sequenz, die Scheitelpunkte des jeweiligen Identifikationsmusters aufweist, umfasst:
Detektieren jedes Identifikationsmusters aus dem Bild, um die Kennung des jeweiligen Identifikationsmusters und die Sequenz zu bestimmen, die die Scheitelpunkte mit Koordinaten in einer Bildebene des Bildes aufweist, wobei jede Kante des jeweiligen Identifikationsmusters eine Kante eines Begrenzungsvierecks des jeweiligen Identifikationsmusters ist.

3. Verfahren nach Anspruch 1 oder 2, wobei das Erhalten (S1503) einer ersten Abbildungsbeziehung zwischen jeder Kennung von Scheitelpunkten auf jeder Kante von Identifikationsmustern in der Anordnung und einer Geraden, auf der die jeweilige Kante der Identifikationsmuster in der Anordnung angeordnet ist, umfasst:
Erhalten einer ersten Tabelle, die die erste Abbildungsbeziehung darstellt, wobei die erste Tabelle eine Entsprechung zwischen jeder Kennung von Scheitelpunkten auf jeder Kante von Identifikationsmustern in der Anordnung und einer Geraden, auf der die jeweilige Kante der Identifikationsmuster in der Anordnung angeordnet ist, angibt.

4. Verfahren nach Anspruch 3, wobei die erste Tabelle erstellt wird, bevor das Bild erhalten wird, und wobei das Erstellen der ersten Tabelle umfasst:
Zuordnen, in der ersten Tabelle, jeder Kennung von Scheitelpunkten auf jeder Kante von Identifikationsmustern in der Anordnung zu einer Kennung einer Geraden, auf der die jeweilige Kante der Identifikationsmuster in der Anordnung angeordnet ist, basierend auf einer Anordnung der Identifikationsmuster in der Anordnung.

5. Verfahren nach einem der Ansprüche 1 bis 4, wobei das Erhalten (S1505) einer zweiten Abbildungsbeziehung zwischen den Geraden und Fluchtpunkten umfasst:
Erhalten einer zweiten Tabelle, die die zweite Abbildungsbeziehung darstellt, wobei die zweite Tabelle eine Entsprechung zwischen Kennungen der Geraden, auf denen Kanten der Identifikationsmuster in der Anordnung angeordnet sind, und Kennungen der Fluchtpunkte angibt.

6. Verfahren nach Anspruch 5, wobei die zweite Tabelle zwei Fluchtpunkten oder drei Fluchtpunkten entspricht,
in einem Fall, in dem die zweite Tabelle zwei Fluchtpunkten entspricht, wobei die zwei Fluchtpunkte einen ersten Fluchtpunkt und einen zweiten Fluchtpunkt umfassen, wobei Geraden, die dem ersten Fluchtpunkt entsprechen, parallel zu einer ersten Koordinatenachse in einem ersten dreidimensionalen rechtwinkligen Koordinatensystem sind, und wobei Geraden, die dem zweiten Fluchtpunkt entsprechen, parallel zu einer zweiten Koordinatenachse in dem ersten dreidimensionalen rechtwinkligen Koordinatensystem sind; oder
in einem Fall, in dem die zweite Tabelle drei Fluchtpunkten entspricht, wobei die drei Fluchtpunkte den ersten Fluchtpunkt, den zweiten Fluchtpunkt und einen dritten Fluchtpunkt umfassen, wobei die Geraden, die dem ersten Fluchtpunkt entsprechen, parallel zu der ersten Koordinatenachse in dem ersten dreidimensionalen rechtwinkligen Koordinatensystem sind, wobei die Geraden, die dem zweiten Fluchtpunkt entsprechen, parallel zu der zweiten Koordinatenachse in dem ersten dreidimensionalen rechtwinkligen Koordinatensystem sind, wobei Geraden, die dem dritten Fluchtpunkt entsprechen, parallel zu einer dritten Koordinatenachse in dem ersten dreidimensionalen rechtwinkligen Koordinatensystem sind.

7. Verfahren nach Anspruch 5, wobei die zweite Tabelle erstellt wird, bevor das Bild erhalten wird, und wobei das Erstellen der zweiten Tabelle umfasst:
Unterteilen, basierend auf einer Anordnung der Identifikationsmuster in der Anordnung, von Geraden, auf denen Kanten der Identifikationsmuster in der Anordnung angeordnet sind, in mindestens zwei Gruppen, wobei Geraden in jeder Gruppe parallel zueinander sind und wobei die Geraden in unterschiedlichen Gruppen senkrecht zueinander sind;
Zuordnen einer Kennung jedes Fluchtpunkts zu den Geraden in der jeweiligen Gruppe; und
Erstellen, basierend auf der Kennung des jeweiligen Fluchtpunkts, die den Geraden in der jeweiligen Gruppe zugeordnet ist, der zweiten Tabelle, die die zweite Abbildungsbeziehung darstellt.

8. Verfahren nach einem der Ansprüche 1 bis 7, wobei das Bestimmen (S1504), basierend auf der ersten Abbildungsbeziehung und den Scheitelpunkten des jeweiligen Identifikationsmusters, von Geradengleichungen, die Geraden anpassen, umfasst:
Abfragen, aus der ersten Abbildungsbeziehung, von Geraden für jeden Scheitelpunkt des jeweiligen Identifikationsmusters;
Zuordnen des jeweiligen Scheitelpunkts des jeweiligen Identifikationsmusters zu den abgefragten Geraden; und
Bestimmen, für jede der abgefragten Geraden, einer Geradengleichung durch die Scheitelpunkte, die der jeweiligen Geraden zugeordnet sind.

9. Verfahren nach einem der Ansprüche 1 bis 8, wobei das Bestimmen (S1506) der Fluchtpunkte basierend auf der zweiten Abbildungsbeziehung und den Geradengleichungen umfasst:
Bestimmen, für jede Geradengleichung, einer Kennung eines Fluchtpunkts, der einer jeweiligen Geraden entspricht, aus der zweiten Abbildungsbeziehung; und
Bestimmen von Koordinaten des Fluchtpunkts in einer Bildebene des Bildes aus Geradengleichungen von Geraden, die der bestimmten Kennung des Fluchtpunkts entsprechen.

10. Verfahren nach Anspruch 9, wobei vor dem Bestimmen von Koordinaten des Fluchtpunkts in einer Bildebene des Bildes aus Geradengleichungen von Geraden, die der bestimmten Kennung des Fluchtpunkts entsprechen, das Verfahren ferner umfasst:
Bestimmen, für die bestimmte Kennung jedes Fluchtpunkts, eines maximalen eingeschlossenen Winkels zwischen den Geraden, die durch die Geradengleichungen dargestellt werden, die der bestimmten Kennung des jeweiligen Fluchtpunkts entsprechen; und
Entfernen der bestimmten Kennung des jeweiligen Fluchtpunkts in einem Fall, in dem der maximale eingeschlossene Winkel kleiner als ein erster Schwellenwert ist.

11. Verfahren nach Anspruch 9, wobei vor dem Bestimmen von Koordinaten des Fluchtpunkts in einer Bildebene des Bildes aus Geradengleichungen von Geraden, die der bestimmten Kennung des Fluchtpunkts entsprechen, das Verfahren ferner umfasst:
Bestimmen, für die bestimmte Kennung jedes Fluchtpunkts, ob eine Anzahl von Geradengleichungen, die der Kennung des jeweiligen Fluchtpunkts entsprechen, einen zweiten Schwellenwert erreicht; und
Entfernen der bestimmten Kennung des jeweiligen Fluchtpunkts in einem Fall, in dem die Anzahl der Geradengleichungen, die der Kennung des jeweiligen Fluchtpunkts entsprechen, kleiner als der zweite Schwellenwert ist.

12. Verfahren nach einem der Ansprüche 1 bis 11, wobei das Kalibrieren (S1507) eines intrinsischen Parameters der Kamerakomponente basierend auf den bestimmten Fluchtpunkten umfasst:
Bestimmen von Koordinaten eines optischen Zentrums der Kamerakomponente basierend auf einer Höhe des Bildes und einer Breite des Bildes;
Bestimmen eines Vektors jedes Fluchtpunkts, wobei der Vektor des jeweiligen Fluchtpunkts zwischen dem jeweiligen Fluchtpunkt und dem optischen Zentrum der Kamerakomponente liegt, wobei die Vektoren unterschiedlicher Fluchtpunkte senkrecht zueinander sind; und
Bestimmen einer Brennweite der Kamerakomponente basierend auf dem Vektor jedes Fluchtpunkts.

13. Eine Computervorrichtung, umfassend: einen Prozessor und einen Speicher,
wobei der Prozessor mit dem Speicher verbunden ist, wobei der Speicher konfiguriert ist, um ein Computerprogramm zu speichern, wobei der Prozessor konfiguriert ist, um das Computerprogramm aufzurufen, um zu bewirken, dass die Computervorrichtung das Verfahren nach einem der Ansprüche 1 bis 12 durchführt.

14. Ein computerlesbares Speichermedium, wobei in dem computerlesbaren Speichermedium ein Computerprogramm gespeichert ist, wobei das Computerprogramm dazu eingerichtet ist, durch einen Prozessor geladen und ausgeführt zu werden, um zu bewirken, dass eine Computervorrichtung, die den Prozessor aufweist, das Verfahren nach einem der Ansprüche 1 bis 12 durchführt.

15. Ein Computerprogrammprodukt, in dem eine oder mehrere Anweisungen gespeichert sind, wobei die eine oder mehreren Anweisungen dazu eingerichtet sind, durch einen Prozessor geladen und ausgeführt zu werden, um zu bewirken, dass der Prozessor das Verfahren nach einem der Ansprüche 1 bis 12 durchführt.

## Revendications

1. Un procédé de traitement de données, exécutable par un dispositif informatique, le procédé comprenant :
obtenir (S1501) une image d'un objet, l'image étant capturée par un composant de caméra, l'image comprenant une ou plusieurs régions planes de l'objet, chacune des une ou plusieurs régions planes comprenant un réseau de motifs d'identification, chacun des motifs d'identification portant des informations d'un identifiant ;
identifier (S1502) un identifiant de chaque motif d'identification à partir de l'image et une séquence ayant des sommets du motif d'identification respectif, les sommets dans la séquence étant dans un ordre prédéfini, chacun des sommets du motif d'identification respectif étant sur une arête du motif d'identification respectif ;
déterminer (S1502) un identifiant de chacun des sommets du motif d'identification respectif en combinant l'identifiant du motif d'identification respectif avec un numéro d'ordre du sommet respectif ;
obtenir (S1503) une première relation de mappage entre chaque identifiant de sommets sur chaque arête de motifs d'identification dans le réseau et une droite où l'arête respective des motifs d'identification dans le réseau est située ;
déterminer (S1504), sur la base de la première relation de mappage et des sommets du motif d'identification respectif, des équations de droite ajustées à des droites ;
obtenir (S1505) une seconde relation de mappage entre les droites et des points de fuite ;
déterminer (S1506) les points de fuite sur la base de la seconde relation de mappage et des équations de droite ; et
étalonner (S1507) un paramètre intrinsèque du composant de caméra sur la base des points de fuite déterminés.

2. Le procédé selon la revendication 1, dans lequel chaque motif d'identification dans le réseau est un code bidimensionnel ; et l'identification (S1502) d'un identifiant de chaque motif d'identification à partir de l'image et d'une séquence ayant des sommets du motif d'identification respectif comprend :
détecter chaque motif d'identification à partir de l'image pour déterminer l'identifiant du motif d'identification respectif et la séquence ayant les sommets avec des coordonnées dans un plan d'image de l'image, chaque arête du motif d'identification respectif étant une arête d'un quadrilatère englobant du motif d'identification respectif.

3. Le procédé selon la revendication 1 ou 2, dans lequel l'obtention (S1503) d'une première relation de mappage entre chaque identifiant de sommets sur chaque arête de motifs d'identification dans le réseau et une droite où l'arête respective des motifs d'identification dans le réseau est située comprend :
obtenir une première table représentant la première relation de mappage, la première table indiquant une correspondance entre chaque identifiant de sommets sur chaque arête de motifs d'identification dans le réseau et une droite où l'arête respective des motifs d'identification dans le réseau est située.

4. Le procédé selon la revendication 3, dans lequel la première table est créée avant que l'image soit obtenue, et la création de la première table comprend :
associer, dans la première table, chaque identifiant de sommets sur chaque arête de motifs d'identification dans le réseau à un identifiant d'une droite où l'arête respective des motifs d'identification dans le réseau est située, sur la base d'un agencement des motifs d'identification dans le réseau.

5. Le procédé selon l'une quelconque des revendications 1 à 4, dans lequel l'obtention (S1505) d'une seconde relation de mappage entre les droites et des points de fuite comprend :
obtenir une seconde table représentant la seconde relation de mappage, la seconde table indiquant une correspondance entre des identifiants des droites où des arêtes des motifs d'identification dans le réseau sont situées et des identifiants des points de fuite.

6. Le procédé selon la revendication 5, dans lequel la seconde table correspond à deux points de fuite ou à trois points de fuite,
dans un cas où la seconde table correspond à deux points de fuite, les deux points de fuite comprenant un premier point de fuite et un deuxième point de fuite, des droites correspondant au premier point de fuite étant parallèles à un premier axe de coordonnées dans un premier système de coordonnées rectangulaires tridimensionnel, et des droites correspondant au deuxième point de fuite étant parallèles à un deuxième axe de coordonnées dans le premier système de coordonnées rectangulaires tridimensionnel ; ou
dans un cas où la seconde table correspond à trois points de fuite, les trois points de fuite comprenant le premier point de fuite, le deuxième point de fuite et un troisième point de fuite, les droites correspondant au premier point de fuite étant parallèles au premier axe de coordonnées dans le premier système de coordonnées rectangulaires tridimensionnel, les droites correspondant au deuxième point de fuite étant parallèles au deuxième axe de coordonnées dans le premier système de coordonnées rectangulaires tridimensionnel, des droites correspondant au troisième point de fuite étant parallèles à un troisième axe de coordonnées dans le premier système de coordonnées rectangulaires tridimensionnel.

7. Le procédé selon la revendication 5, dans lequel la seconde table est créée avant que l'image soit obtenue, et la création de la seconde table comprend :
diviser, sur la base d'un agencement des motifs d'identification dans le réseau, des droites où des arêtes des motifs d'identification dans le réseau sont situées, en au moins deux groupes, des droites dans chaque groupe étant parallèles les unes aux autres, et les droites dans différents groupes étant perpendiculaires les unes aux autres ;
associer un identifiant de chaque point de fuite aux droites dans le groupe respectif ; et
créer, sur la base de l'identifiant du point de fuite respectif associé aux droites dans le groupe respectif, la seconde table représentant la seconde relation de mappage.

8. Le procédé selon l'une quelconque des revendications 1 à 7, dans lequel la détermination (S1504), sur la base de la première relation de mappage et des sommets du motif d'identification respectif, d'équations de droite ajustées à des droites comprend :
interroger, à partir de la première relation de mappage, des droites pour chaque sommet du motif d'identification respectif ;
associer le sommet respectif du motif d'identification respectif aux droites interrogées ; et
déterminer, pour chacune des droites interrogées, une équation de droite par les sommets associés à la droite respective.

9. Le procédé selon l'une quelconque des revendications 1 à 8, dans lequel la détermination (S1506) des points de fuite sur la base de la seconde relation de mappage et des équations de droite comprend :
déterminer, pour chaque équation de droite, un identifiant d'un point de fuite correspondant à une droite respective à partir de la seconde relation de mappage ; et
déterminer des coordonnées du point de fuite dans un plan d'image de l'image à partir d'équations de droite de droites correspondant à l'identifiant déterminé du point de fuite.

10. Le procédé selon la revendication 9, avant la détermination de coordonnées du point de fuite dans un plan d'image de l'image à partir d'équations de droite de droites correspondant à l'identifiant déterminé du point de fuite, le procédé comprenant en outre :
déterminer, pour l'identifiant déterminé de chaque point de fuite, un angle inclus maximal entre les droites représentées par les équations de droite correspondant à l'identifiant déterminé du point de fuite respectif ; et
supprimer l'identifiant déterminé du point de fuite respectif, dans un cas où l'angle inclus maximal est inférieur à un premier seuil.

11. Le procédé selon la revendication 9, avant la détermination de coordonnées du point de fuite dans un plan d'image de l'image à partir d'équations de droite de droites correspondant à l'identifiant déterminé du point de fuite, le procédé comprenant en outre :
déterminer, pour l'identifiant déterminé de chaque point de fuite, si une quantité d'équations de droite correspondant à l'identifiant du point de fuite respectif atteint un deuxième seuil ; et
supprimer l'identifiant déterminé du point de fuite respectif, dans un cas où la quantité des équations de droite correspondant à l'identifiant du point de fuite respectif est inférieure au deuxième seuil.

12. Le procédé selon l'une quelconque des revendications 1 à 11, dans lequel l'étalonnage (S1507) d'un paramètre intrinsèque du composant de caméra sur la base des points de fuite déterminés comprend :
déterminer des coordonnées d'un centre optique du composant de caméra sur la base d'une hauteur de l'image et d'une largeur de l'image ;
déterminer un vecteur de chaque point de fuite, le vecteur du point de fuite respectif étant entre le point de fuite respectif et le centre optique du composant de caméra, les vecteurs de différents points de fuite étant perpendiculaires les uns aux autres ; et
déterminer une distance focale du composant de caméra sur la base du vecteur de chaque point de fuite.

13. Un dispositif informatique, comprenant : un processeur et une mémoire,
le processeur étant connecté à la mémoire, la mémoire étant configurée pour stocker un programme informatique, le processeur étant configuré pour invoquer le programme informatique, pour amener le dispositif informatique à réaliser le procédé selon l'une quelconque des revendications 1 à 12.

14. Un support de stockage lisible par ordinateur, le support de stockage lisible par ordinateur ayant un programme informatique stocké dans celui-ci, le programme informatique étant adapté pour être chargé et exécuté par un processeur, pour amener un dispositif informatique ayant le processeur à réaliser le procédé selon l'une quelconque des revendications 1 à 12.

15. Un produit programme informatique, ayant une ou plusieurs instructions stockées dans celui-ci, les une ou plusieurs instructions étant adaptées pour être chargées et exécutées par un processeur, pour amener le processeur à réaliser le procédé selon l'une quelconque des revendications 1 à 12.
